# FASCICULE DE BREVET EUROPEEN

(11) **EP 4 646 579 B1**
(45) Date de publication et mention de la délivrance du brevet: **14.01.2026**
(21) Numéro de dépôt: 25713863.6
(22) Date de dépôt: 20.03.2025
(51) Int. Cl.: G01G 13/02, G01G 23/37, G01F 23/20, G01F 22/00, B65D 90/48, G01G 21/23

(54) **SYSTÈME DE DÉTECTION DU TRANSFERT D'UN SILO TRANSPORTABLE D'UN PREMIER SITE D'EXPLOITATION VERS UN DEUXIÈME SITE D'EXPLOITATION**
SYSTEM ZUR ERKENNUNG DES UMSCHLAGS EINES TRANSPORTFÄHIGEN SILOS VON EINEM ERSTEN ARBEITSPLATZ ZU EINEM ZWEITEN ARBEITSPLATZ
SYSTEM FOR DETECTING THE TRANSFER OF A TRANSPORTABLE SILO FROM A FIRST OPERATING SITE TO A SECOND OPERATING SITE

(30) Priorité: 22.03.2024 FR 2402918
(43) Date de publication de la demande: 12.11.2025
(73) Titulaire: Nanolike, 31400 Toulouse (FR)
(72) Inventeur: POIROT, David, 31400 Toulouse (FR)
(74) Mandataire: A.P.I. Conseil
(86) Numéro de dépôt international: PCT/EP2025/057729
(87) Numéro de publication internationale: WO 2025/196239

(56) Documents cités:
- US-A1- 2012 204 978
- US-A1- 2020 283 226
- US-A1- 2022 187 116

## Description

### Domaine technique

L'invention concerne le domaine des systèmes de gestion de silos transportables pour le stockage et/ou le mélange de matériaux en vrac.

Plus précisément, il s'agit d'un système spécifiquement conçu pour détecter le transfert d'un silo transportable d'un premier site d'exploitation vers un deuxième site d'exploitation, impliquant un changement des conditions locales du terrain et du sol auxquelles le silo transportable est soumis au niveau du nouveau site d'exploitation. Des systèmes similaires sont connus du document US2022187116A1.

### Technique antérieure

Dans le secteur de l'exploitation des silos, une problématique courante est d'estimer le niveau de remplissage d'un silo.

Cette problématique est connue du document EP3963296A1.

Dans ce document, l'estimation du niveau de remplissage d'un silo est réalisée à l'aide d'un modèle mathématique qui prend en compte divers paramètres liés aux conditions spécifiques du site d'exploitation. Ces particularités sont liées d'une part à la structure même du silo, comprenant sa forme, son nombre de pieds, ses renforcements latéraux et sa capacité, et d'autre part au type de liaison au sol du silo, dépendant de la surface d'implantation (plane, régulière, etc.) et propre au site d'exploitation.

La prise en compte de ces conditions spécifiques est essentielle pour assurer la précision de l'estimation du niveau de remplissage, le modèle mathématique devant s'adapter aux caractéristiques physiques réelles du silo et de son environnement.

Cependant, lorsque le silo est transportable et qu'il est déplacé d'un site d'exploitation à un autre, le modèle mathématique doit être recalibré pour tenir compte du changement des conditions locales auxquelles le silo est soumis au niveau du nouveau site d'exploitation.

En effet, les conditions du nouveau site d'exploitation peuvent influencer l'estimation du niveau de remplissage du silo.

Par exemple, si le sol du nouveau site d'exploitation est plus penché que le précédent, cela pourrait rendre le silo bancal. Une telle inclination du terrain pourrait affecter la distribution du contenu du silo et par conséquent, cela peut fausser l'estimation du niveau de remplissage basée sur le modèle mathématique initial.

Classiquement, le recalibrage du modèle mathématique requiert l'intervention d'un opérateur humain constatant un changement de site d'exploitation, et décidant alors d'initier le processus de recalibrage.

Ce processus initié par un opérateur humain peut s'avérer fastidieux et coûteux en raison des ressources humaines et techniques considérables nécessaires à l'évaluation visuelle des nouvelles conditions locales du site d'exploitation.

Ainsi, il existe un besoin d'un processus plus efficace pour recalibrer le modèle d'estimation du niveau de remplissage du silo lors du transfert de celui-ci d'un site à un autre, permettant de surmonter les inconvénients des procédures actuelles fastidieuses et coûteuses. Le document US 2022187116A1 divulgue un système pour détecter le transfert d'un silo transportable et pour effectuer une mesure de niveau de matériau dans le silo basé sur la détection de déformations d'un pied d'appui du silo sur le sol.

### Résumé de l'invention

L'invention vise à résoudre, au moins partiellement, ce besoin.

Un premier aspect de l'invention concerne un système spécifiquement conçu pour détecter le transfert d'un silo transportable 200 d'un premier site d'exploitation vers un deuxième site d'exploitation, impliquant un changement des conditions locales du terrain et du sol auxquelles le silo transportable 200 est soumis.

En pratique, le silo transportable est spécifiquement destiné au stockage et/ou au mélange d'au moins un matériau en vrac.

En outre, le silo transportable comprenant au moins trois pieds d'appui au sol.

Dans l'invention, le système comprend,
- au moins un capteur de déformation qui est conçu pour,
- être fixé sur au moins un pied d'appui au sol,
- détecter et horodater des déformations du pied d'appui au sol, en réponse à l'introduction ou à l'extraction du matériau en vrac dans le silo transportable,
- convertir les déformations détectées en valeurs de déformation horodatées, et
- générer au moins un premier signal de mesure qui comprend les valeurs de déformation horodatées,
- au moins un capteur de contrôle d'appui au sol du silo transportable qui est conçu pour,
- être fixé au silo transportable,
- détecter et horodater des données de contrôle d'appui au sol du silo transportable, en réponse au transfert du silo transportable,
- convertir les données de contrôle d'appui au sol du silo transportable par le pied d'appui au sol détectées, en valeurs de contrôle d'appui au sol horodatées,
- générer au moins un deuxième signal de mesure qui comprend les valeurs de contrôle d'appui au sol horodatées,
- au moins un premier dispositif de communication sans fil qui est conçu pour émettre le premier signal de mesure et le deuxième signal de mesure,
- au moins un serveur distant qui comprend,
- au moins un deuxième dispositif de communication sans fil qui est conçu pour recevoir le premier signal de mesure et le deuxième signal de mesure,
- au moins une mémoire de stockage qui conçue pour stocker au moins un premier modèle mathématique d'estimation de remplissage du silo transportable et l'associer au premier site d'exploitation,
- au moins un processeur qui est conçu pour,
- réaliser un traitement numérique du premier signal de mesure et du deuxième signal de mesure, pour extraire les valeurs de déformation horodatées du premier signal de mesure et les valeurs de contrôle d'appui au sol horodatées du deuxième signal de mesure, respectivement,
- déterminer le début et la fin du transfert du silo transportable à partir au moins des valeurs de contrôle d'appui au sol horodatées,
- établir, en réponse à la détermination de la fin du transfert du silo transportable, un deuxième modèle mathématique d'estimation de remplissage qui comprend au moins un premier paramètre qui caractérise le taux de remplissage du silo transportable et au moins un deuxième paramètre qui caractérise la variation temporelle de tout ou partie des valeurs de déformation horodatées qui ont été détectées après la fin du transfert du silo transportable,
- stocker le deuxième modèle mathématique d'estimation de remplissage dans la mémoire de stockage et l'associer au deuxième site d'exploitation, et
- obtenir une estimation du niveau de remplissage du silo transportable à partir du deuxième modèle mathématique d'estimation de remplissage.

Dans une première variante de l'invention,
- les valeurs de contrôle d'appui au sol horodatées comprennent des valeurs de déformation horodatées, mesurées sur le pied d'appui au sol,
- le capteur de déformation assure également la fonction du capteur de contrôle d'appui au sol du silo transportable,
- le processeur est en outre conçu pour,
- réaliser un traitement numérique de discrimination de tout ou partie des valeurs de déformation horodatées pour discriminer,
- d'une part, des premières valeurs de déformation horodatées qui se situent au-delà d'une marge prédéterminée de tolérance autour d'une valeur prédéterminée de compression du pied d'appui au sol, et
- d'autre part, des deuxièmes valeurs de déformation horodatées qui se situent au-delà d'une marge prédéterminée de tolérance autour d'une valeur prédéterminée de traction du pied d'appui au sol,
- déterminer,
- le début du transfert du silo transportable à partir au moins de la variation temporelle des premières valeurs de déformation horodatées, et
- la fin du transfert du silo transportable à partir au moins de la variation temporelle des deuxièmes valeurs de déformation horodatées.

Dans une deuxième variante de l'invention,
- les valeurs de contrôle d'appui au sol horodatées comprennent des valeurs de déformation horodatées, mesurées, lors de la mise en appui du silo transportable au sol, sur au moins un élément sensible à la déformation qui est couplé au silo transportable,
- le capteur de contrôle d'appui au sol du silo transportable comprend au moins un deuxième capteur de déformation qui est conçu pour délivrer les valeurs de déformation horodatées,
- le processeur est en outre conçu pour,
- réaliser un traitement numérique de discrimination de tout ou partie des valeurs de déformation horodatées pour discriminer,
- d'une part, des premières valeurs de déformation horodatées qui se situent au-delà d'une marge prédéterminée de tolérance autour d'une valeur prédéterminée, connue, de compression de l'élément sensible à la déformation, et
- d'autre part, des deuxièmes valeurs de déformation horodatées qui se situent dans la marge prédéterminée de tolérance autour d'une valeur prédéterminée, connue, de traction de l'élément sensible à la déformation,
- déterminer,
- le début du transfert du silo transportable à partir au moins de la variation temporelle des premières valeurs de déformation horodatées, et
- la fin du transfert du silo transportable à partir au moins de la variation temporelle des deuxièmes valeurs de déformation horodatées.

Dans une troisième variante de l'invention,
- les valeurs de contrôle d'appui au sol horodatées comprennent des valeurs d'angle d'inclinaison horodatées, mesurées par rapport à un horizon géographique,
- le capteur de contrôle d'appui au sol du silo transportable comprend au moins un inclinomètre qui est conçu pour délivrer les valeurs d'angle d'inclinaison horodatées,
- le processeur est en outre conçu pour,
- réaliser un traitement numérique de discrimination de tout ou partie des valeurs d'angle d'inclinaison horodatées pour discriminer,
- d'une part, des premières valeurs d'angle d'inclinaison horodatées qui se situent au-delà d'une marge prédéterminée de tolérance autour d'une position de référence initiale du pied d'appui au sol, et
- d'autre part, des deuxièmes valeurs d'angle d'inclinaison horodatées qui se situent dans la marge prédéterminée de tolérance autour de la position de référence initiale du pied d'appui au sol,
- déterminer,
- le début du transfert du silo transportable à partir au moins de la variation temporelle des premières valeurs d'angle d'inclinaison horodatées, et
- la fin du transfert du silo transportable à partir au moins de la variation temporelle des deuxièmes valeurs d'angle d'inclinaison horodatées.

Dans une quatrième variante de l'invention,
- les valeurs de contrôle d'appui au sol horodatées comprennent des valeurs d'accélération horodatées, mesurées par rapport au champ gravitationnel terrestre local,
- le capteur de contrôle d'appui au sol du silo transportable comprend au moins un accéléromètre, qui sont conçus pour délivrer les valeurs d'accélération horodatées,
- le processeur est en outre conçu pour,
- réaliser un traitement numérique de discrimination de tout ou partie des valeurs d'accélération horodatées pour discriminer,
- d'une part, des premières valeurs d'accélération horodatées qui se situent au-delà d'une marge prédéterminée de tolérance autour d'une valeur prédéterminée d'accélération, et
- d'autre part, des deuxièmes valeurs d'accélération horodatées qui se situent dans la marge prédéterminée de tolérance autour de la valeur prédéterminée d'accélération,
- déterminer,
- le début du transfert du silo transportable à partir au moins de la variation temporelle des premières valeurs d'accélération horodatées, et
- la fin du transfert du silo transportable à partir au moins de la variation temporelle des deuxièmes valeurs d'accélération horodatées.

Dans une cinquième variante de l'invention,
- les valeurs de contrôle d'appui au sol horodatées comprennent des valeurs de géolocalisation horodatées,
- le capteur de contrôle d'appui au sol du silo transportable comprend au moins un détecteur de géolocalisation qui est conçu pour délivrer les valeurs de géolocalisation horodatées,
- le processeur est en outre conçu pour,
- réaliser un traitement numérique de discrimination de tout ou partie des valeurs de géolocalisation horodatées pour discriminer,
- d'une part, des premières valeurs de géolocalisation horodatées qui se situent au-delà d'une marge prédéterminée de tolérance autour d'une valeur prédéterminée de géolocalisation, et
- d'autre part, des deuxièmes valeurs de géolocalisation horodatées qui se situent dans la marge prédéterminée de tolérance autour de la valeur prédéterminée de géolocalisation,
- déterminer,
- le début du transfert du silo transportable à partir au moins de la variation temporelle des premières valeurs de géolocalisation horodatées, et
- la fin du transfert du silo transportable à partir au moins de la variation temporelle des deuxièmes valeurs de géolocalisation horodatées.

Dans une cinquième variante de l'invention,
lorsque le capteur de déformation et le capteur de contrôle d'appui au sol du silo transportable sont deux capteurs distincts et indépendants, alors,
- le processeur est en outre conçu pour délivrer,
- des instructions d'activation du capteur de déformation, en réponse à la détermination du début du transfert du silo transportable,
- des instructions de désactivation du capteur de déformation, en réponse à la détermination de la fin du transfert du silo transportable,
- le deuxième dispositif de communication sans fil est en outre conçu pour émettre les instructions d'activation et de désactivation,
- le premier dispositif de communication sans fil est en outre conçu pour recevoir les instructions d'activation et de désactivation,
- le capteur de déformation est en outre conçu pour,
- désactiver la détection des déformations du pied d'appui au sol, en réponse à la réception des instructions de désactivation, et
- activer la détection des déformations du pied d'appui au sol, en réponse à la réception des instructions d'activation.

Dans une sixième variante de l'invention, le capteur de contrôle d'appui au sol du silo transportable comprend au moins deux capteurs du même type ou de types différents choisis au moins parmi : un capteur de déformation, un inclinomètre, un accéléromètre et un détecteur de géolocalisation.

Dans une première réalisation particulière de l'invention, le deuxième modèle mathématique d'estimation de remplissage définit une relation linéaire entre le taux de remplissage du silo transportable et la variation temporelle de valeurs de déformation horodatées.

Dans une deuxième réalisation particulière de l'invention, le deuxième modèle mathématique d'estimation de remplissage définit une relation déterminée de façon empirique entre le taux de remplissage du silo transportable et la variation temporelle de valeurs de déformation horodatées.

Dans une troisième réalisation particulière de l'invention, au moins un capteur de déformation est fixé sur chaque pied d'appui au sol.

Dans une quatrième réalisation particulière de l'invention, au moins un capteur de contrôle d'appui au sol du silo transportable est fixé sur chaque pied d'appui au sol ou à chaque élément sensible à la déformation qui est couplé au silo transportable.

### Brève description des dessins

D'autres caractéristiques et avantages de l'invention seront mieux compris à la lecture de la description qui va suivre et en référence aux dessins annexés, donnés à titre illustratif et nullement limitatif.
[Fig.1] La [Fig.1] représente un système selon l'invention.
[Fig.2] La [Fig.2] représente un silo transportable pourvu du système d'une partie du système de la [Fig.1].

Les figures ne respectent pas nécessairement les échelles, et ce, à des fins d'illustration.

En outre, certains dessins sont présentés en couleurs et/ou en transparence, car leur représentation en noir et blanc est impossible. En particulier, les couleurs sont nécessaires dans ces dessins pour discerner des détails qui seraient perdus s'ils étaient présentés en noir et blanc.

### Description des variantes de l'invention

### Remarques préliminaires

Afin de ne pas obscurcir la description et détourner le lecteur de la compréhension des enseignements de l'invention, nos explications n'iront pas au-delà de ce que nous considérons comme nécessaire pour la compréhension et l'appréciation des concepts sous-jacents de l'invention par une personne du domaine technique des dispositifs de manutention. En effet, les variantes de l'invention qui sont illustrées dans la description sont, pour la plupart, composées d'éléments connus de la personne du métier.

### Objectif de l'invention

L'un des objectifs de cette invention est de fournir un système qui utilise un mécanisme innovant pour détecter le transfert d'un silo transportable d'un premier site d'exploitation vers un deuxième site d'exploitation, impliquant un changement des conditions locales au niveau du nouveau site d'exploitation. Ce système vise à s'adapter de manière intelligente à ces nouvelles conditions sans nécessiter une intervention humaine fastidieuse.

Le terme «transportable» dans l'invention se réfère à la capacité du silo à être déplacé d'un lieu à un autre. C'est-à-dire que le silo peut être déplacé d'un premier site d'exploitation à un deuxième site d'exploitation. Ce caractère transportable est dû à la conception du silo, qui permet son déplacement sans nécessiter de démontage ou de construction complexe.

En pratique, l'inventeur a constaté qu'un tel transfert implique souvent que le silo transportable est allongé sur un camion ou soulevé du sol par une grue.

Dans ce cadre, l'inventeur propose un système qui comprend un capteur de contrôle d'appui au sol agissant comme un indicateur qui détecte si le pied d'appui au sol du silo transportable, sur lequel est installé le système, soutient effectivement le silo transportable pendant le transfert du silo.

Grâce à cet agencement, le système selon l'invention permet de détecter efficacement le transfert du silo transportable d'un site d'exploitation vers un autre, impliquant un changement des conditions locales auxquelles il est soumis, sans nécessiter l'intervention fastidieuse et coûteuse d'un opérateur humain pour constater ces nouvelles conditions locales et initier le processus de recalibrage.

Grâce à son mécanisme innovant basé sur un capteur de contrôle détectant l'état d'appui du silo transportable sur le sol, le système proposé permet une adaptation intelligente aux nouvelles conditions locales lors du transfert, sans intervention humaine fastidieuse. Cela représente un avantage significatif par rapport aux procédures classiques en termes d'optimisation des ressources humaines et techniques.

### L'invention et son contexte

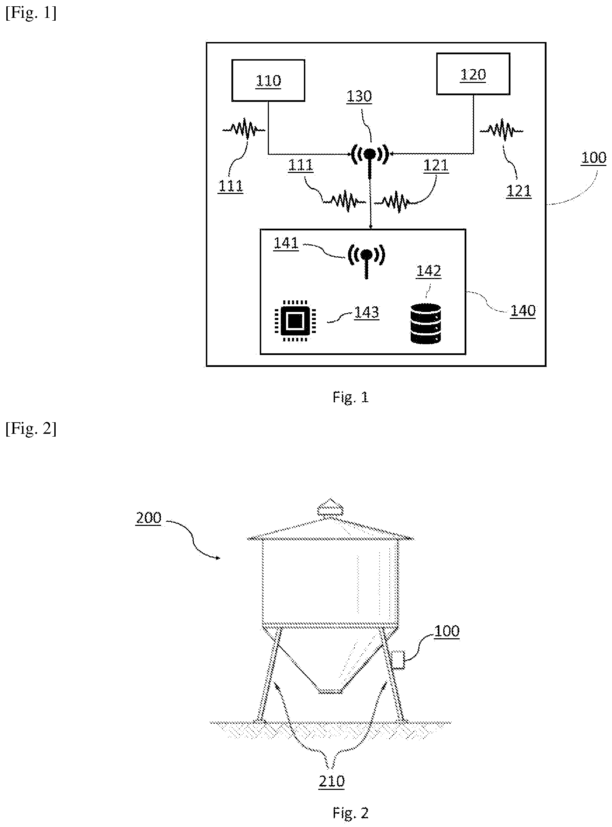

Dans l'invention, comme illustré sur la [Fig.1] et la [Fig.2], le système 100 est spécifiquement conçu pour détecter le transfert d'un silo transportable 200 d'un premier site d'exploitation vers un deuxième site d'exploitation, impliquant un changement des conditions locales du terrain et du sol auxquelles le silo transportable 200 est soumis.

Le terme « spécifiquement» dans l'invention signifie que le système 100 a été conçu de manière particulière et précise pour détecter le transfert d'un silo transportable 200 d'un premier site d'exploitation vers un deuxième site d'exploitation, ce qui implique un changement des conditions locales auxquelles il est soumis.

Le terme «conditions locales du terrain et du sol» dans l'invention se réfère aux caractéristiques et propriétés spécifiques de l'environnement terrestre à un site d'exploitation donné, qui définissent le type de liaison au sol du silo, le type de liaison dépendant de la surface d'implantation (p. ex. plane, régulière, etc.) qui est propre au site d'exploitation.

Cela peut inclure des éléments tels que la texture du sol, la composition minérale, le niveau d'humidité, la topographie du terrain, ainsi que d'autres facteurs environnementaux et géologiques qui peuvent influencer la performance et le fonctionnement du silo transportable 200.

Ces changements de conditions locales peuvent avoir un impact sur la stabilité du silo transportable 200, sa capacité à maintenir une position sécurisée, la répartition du poids sur chacun de ses pieds d'appui, et d'autres aspects de ses performances dans le nouveau site d'exploitation.

Par exemple, le premier site d'exploitation pourrait être caractérisé par un terrain plat avec un sol dur, tandis que le deuxième site d'exploitation pourrait présenter un terrain accidenté avec un sol meuble ou boueux, ce qui constitue un changement significatif des conditions locales pour le silo.

Le terme «transfert» dans l'invention, désigne le processus de déplacement du silo transportable 200 d'un premier site d'exploitation vers un deuxième site d'exploitation, ce qui implique un changement des conditions locales auxquelles il est soumis.

Le terme «site d'exploitation » fait référence à l'emplacement ou au lieu où le silo transportable 200 est utilisé.

Par ailleurs, le silo transportable 200 est spécifiquement destiné au stockage et/ou au mélange d'au moins un matériau en vrac.

Le terme «stockage» dans l'invention, fait référence à l'action de conserver ou de garder un matériau en vrac dans le silo transportable 200.

Dans un premier exemple, le matériau en vrac peut être du grain. Dans le contexte de l'agriculture, le grain est souvent stocké en grande quantité et nécessite un endroit sûr et stable pour être entreposé, comme le silo transportable 200 dans le système 100.

Dans un deuxième exemple, le matériau en vrac peut être du sable. Le sable est souvent utilisé dans les industries de la construction et du génie civil, et peut également nécessiter un stockage approprié, ce que peut fournir le silo transportable 200.

Dans un troisième exemple, le matériau en vrac peut être du ciment. Le ciment est un composant essentiel dans la fabrication du béton et est généralement stocké en grande quantité. Le silo transportable 200 dans le système 100 serait donc une solution appropriée pour le stockage du ciment.

Toutefois, cela pourrait être tout autre matériau en vrac qui nécessite un endroit sûr et stable pour être entreposé.

Le terme «mélange», quant à lui, signifie la combinaison de différents matériaux en vrac dans le silo transportable 200.

Par exemple, dans le cas d'une exploitation agricole, le silo transportable 200 pourrait être utilisé pour mélanger différents types de grains pour créer un mélange spécifique.

Par exemple, dans le cas d'une industrie de fabrication de ciment, le silo transportable 200 pourrait être utilisé pour mélanger du calcaire et de l'argile. Ce sont les deux principaux ingrédients du ciment Portland, qui est le type de ciment le plus couramment utilisé dans le monde.

Bien sûr, les deux fonctions du silo transportable 200, le stockage et le mélange peuvent être utilisées séparément ou en combinaison, en fonction des besoins spécifiques du site d'exploitation.

En outre, le silo transportable 200 comprend au moins trois pieds d'appui au sol 210.

Le terme «pied d'appui au sol» dans l'invention, désigne une partie du silo transportable 200 qui est destinée à être en contact avec le sol pour supporter la structure de manière stable. Ces pieds d'appui au sol 210 assurent une base solide au silo transportable 200, permettant son installation et son utilisation en toute sécurité.

Par exemple, si le silo transportable 200 est installé sur un sol inégal ou instable, ces pieds d'appui au sol 210 aident à le maintenir en position verticale et stable.

De plus, ces pieds d'appui au sol 210 peuvent être pourvus de renforts latéraux, tels que des traverses entre les pieds ou des «skis» reliant deux pieds au sol. Ces renforts contribuent à augmenter la stabilité mécanique du silo.

### Structure générale de l'invention

Comme illustré sur la [Fig.1], le système 100 comporte plusieurs composants : au moins un capteur de déformation 110, au moins un capteur de contrôle d'appui au sol 120 du silo transportable 200, au moins un premier dispositif de communication sans fil 130, et au moins un serveur distant 140.

### Le capteur de déformation

Dans l'invention, le capteur de déformation 110 est conçu pour être fixé sur au moins un pied d'appui au sol 210.

Le terme «capteur de déformation » dans l'invention, désigne un dispositif qui est conçu pour mesurer les changements ou les déformations dans la structure sur laquelle il est fixé - dans ce cas, sur au moins un pied d'appui au sol du silo transportable 200.

Dans un premier exemple, une jauge de contrainte pourrait servir de capteur de déformation. Les jauges de contrainte sont des dispositifs qui changent de résistance électrique en réponse à une déformation physique. Elles sont couramment utilisées dans de nombreux domaines de la mesure pour détecter des déformations.

Dans un deuxième exemple, un capteur piézoélectrique pourrait être utilisé comme capteur de déformation. Ces capteurs génèrent une tension électrique en réponse à une pression mécanique, ce qui peut être utilisé pour détecter des déformations.

Le terme «fixé» dans l'invention se réfère à l'action d'attacher solidement le capteur de déformation 110 à au moins un pied d'appui au sol 210. Cela signifie que le capteur de déformation 110 est installé de manière stable et sécurisée sur le pied d'appui au sol 210, de manière à ne pas se déplacer ou se détacher facilement.

Dans un premier exemple, le capteur de déformation 110 pourrait être fixé par vissage au pied d'appui au sol 210. Le vissage est une méthode de fixation couramment utilisée qui offre une bonne stabilité et résistance aux vibrations.

Dans un deuxième exemple, le capteur de déformation 110 pourrait être fixé à l'aide d'un adhésif industriel sur le pied d'appui au sol 210. Certains adhésifs sont conçus pour résister à des conditions difficiles, comme les vibrations et les températures extrêmes.

Dans un troisième exemple, le capteur de déformation 110 pourrait être fixé par soudage au pied d'appui au sol 210. Le soudage est une méthode de fixation très résistante qui assure une bonne stabilité et empêche le capteur de se détacher facilement.

Dans une variante particulière, on fixe au moins un capteur de déformation 110 sur chaque pied d'appui au sol 210.

Autrement dit, dans cette variante particulière, chaque pied d'appui au sol 210 aurait son propre capteur de déformation 110. Cela pourrait offrir une surveillance plus complète de la structure, car chaque pied d'appui au sol 210 serait capable de détecter et de signaler individuellement toute modification ou déformation de sa structure.

Par ailleurs, le capteur de déformation 110 est en outre conçu pour détecter et horodater des déformations du pied d'appui au sol 210, en réponse à l'introduction ou à l'extraction du matériau en vrac dans le silo transportable 200.

Le terme «détecter» dans l'invention fait référence à la capacité du capteur de déformation 110 à percevoir ou à identifier les changements ou les déformations du pied d'appui au sol 210.

Le terme «horodater» signifie attribuer une date et/ou un horaire précis à un événement ou à une action. En ce qui concerne le capteur de déformation 110, cela signifie, par exemple, qu'il est capable de noter l'heure exacte à laquelle une déformation a été détectée.

Le terme «en réponse à» indique qu' une action ou une réaction est déclenchée par un autre événement. Dans l'invention, cela signifie que le capteur de déformation 110 détecte et horodate les déformations du pied d'appui au sol 210 lorsqu'un matériau en vrac est introduit ou extrait du silo transportable 200.

Ainsi, si du matériau en vrac est ajouté ou retiré du silo transportable 200, ce qui provoque une déformation du pied d'appui au sol 210, le capteur de déformation 110 serait capable de détecter cette déformation et d'enregistrer l'heure exacte de cette occurrence.

Cela permettrait d'avoir un enregistrement précis de quand et comment les déformations se produisent, ce qui pourrait être utile pour analyser et comprendre les conditions sous lesquelles ces déformations sont plus susceptibles de se produire.

Ensuite, le capteur de déformation 110 est en outre conçu pour convertir les déformations détectées en valeurs de déformation horodatées.

Le terme «convertir» dans l'invention fait référence à la capacité du capteur de déformation 110 à transformer ou à traduire les déformations détectées en une autre forme ou unité de mesure, ici en valeurs de déformation horodatées.

Le terme « valeurs » se réfère aux mesures numériques ou quantitatives associées aux déformations détectées par le capteur de déformation 110. Ces valeurs sont horodatées, c'est-à-dire qu'elles sont associées à un moment précis dans le temps.

Par exemple, si le capteur de déformation 110 détecte une déformation du pied d'appui au sol 210 à 14h30, il pourrait convertir cette déformation en une valeur spécifique, disons 0.05, et cette valeur serait ensuite associée à l'heure de 14h30.

Enfin, le capteur de déformation 110 est en outre conçu pour générer un premier signal de mesure 111 qui comprend les valeurs de déformation horodatées.

Le terme «générer» dans l'invention fait référence à la capacité du capteur de déformation 110 à produire ou à créer un premier signal de mesure 111 à partir des valeurs de déformation horodatées.

Le terme «signal» désigne une transmission d'informations sous forme électronique ou électrique. Dans ce cas, le signal de mesure est une forme de communication du capteur de déformation 110 qui comprend les valeurs de déformation horodatées.

Par exemple, si le capteur de déformation 110 détecte une déformation du pied d'appui au sol 210 et convertit cette déformation en une valeur horodatée, il pourrait ensuite générer un signal de mesure qui contient cette valeur horodatée.

Ce signal de mesure pourrait ensuite être utilisé pour communiquer l'information sur la déformation détectée à d'autres parties du système ou à un opérateur humain.

Dans un premier exemple, le signal de mesure pourrait être un signal analogique. Dans ce cas, les valeurs de déformation seraient converties en une tension ou un courant électrique proportionnel à la déformation, et cette tension ou ce courant serait horodaté et transmis comme signal de mesure.

Dans un deuxième exemple, le signal de mesure pourrait être un signal numérique. Avec ce type de signal, les valeurs de déformation seraient converties en une série de nombres binaires qui seraient ensuite horodatés et transmis sous forme de signal de mesure.

Dans un troisième exemple, le signal de mesure pourrait être un signal modulé en fréquence (FM). Dans ce cas, la fréquence du signal serait modulée en fonction des valeurs de déformation. Ces fréquences modulées seraient ensuite horodatées et transmises comme signal de mesure.

### Le capteur de contrôle d'appui au sol 120 du silo transportable

Dans l'invention, le capteur de contrôle d'appui au sol 120 du silo transportable 200 est conçu pour être fixé au silo transportable 200.

En particulier, le capteur de contrôle d'appui au sol 120 du silo est fixé sur l'enveloppe extérieure du silo transportable 200, par exemple, sur au moins un pied d'appui au sol 210, sur au moins la couverture supérieure, sur au moins l'ouverture de remplissage, sur au moins l'ouverture de vidange, sur au moins les ouvertures d'aération.

En pratique, le capteur de contrôle d'appui au sol 120 du silo transportable 200 est conçu pour agir comme un indicateur qui permet de savoir si le pied d'appui au sol 210 est effectivement en train de soutenir le silo transportable 200.

En particulier, si le capteur de contrôle d'appui au sol 120 indique que le pied d'appui au sol 210 porte la charge du silo transportable 200, cela signifie qu'il est en contact avec le sol.

Par ailleurs, si le capteur de contrôle d'appui au sol 120 indique que le pied d'appui au sol 210 ne supporte pas le silo transportable 200, cela veut dire qu'il n'est pas en contact avec le sol.

Dans une variante particulière, on fixe au moins un capteur de contrôle d'appui au sol 120 du silo transportable 200 sur chaque pied d'appui au sol 210.

Par ailleurs, le capteur de contrôle d'appui au sol 120 est en outre conçu pour détecter et horodater des données de contrôle d'appui au sol 120 du silo transportable 200, en réponse au transfert du silo transportable 200.

Le capteur de contrôle d'appui au sol 120 est en outre conçu pour convertir les données de contrôle d'appui au sol 120 du silo transportable 200 en valeurs de contrôle d'appui au sol horodatées.

Enfin, le capteur de contrôle d'appui au sol 120 est en outre conçu pour générer un deuxième signal de mesure 121 qui comprend les valeurs de contrôle d'appui au sol horodatées.

### Le premier dispositif de communication sans fil

Dans l'invention, le premier dispositif de communication sans fil 130 est conçu pour émettre le premier signal de mesure 111 et le deuxième signal de mesure 121.

Le terme «émettre» dans l'invention fait référence à la capacité du premier dispositif de communication sans fil 130 à envoyer ou à diffuser le premier et le deuxième signal de mesure 121. C'est un processus qui permet de transmettre des informations d'un point à un autre.

Ainsi, une fois que le premier signal de mesure 111 et le deuxième signal de mesure 121 ont été générés, ils peuvent être émis par le premier dispositif de communication sans fil 130.

Ces signaux de mesure 111, 121 peuvent alors être reçus et interprétés par un autre dispositif dans le système.

Dans un premier exemple, le premier dispositif de communication sans fil 130 pourrait être un émetteur Bluetooth. Ce type de dispositif utilise la technologie Bluetooth pour émettre des signaux de mesure à courte portée, généralement à moins de 100 mètres.

Dans un deuxième exemple, le premier dispositif de communication sans fil 130 pourrait être un émetteur Wi-Fi. Les dispositifs Wi-Fi peuvent émettre des signaux de mesure à une portée plus grande que les dispositifs Bluetooth, généralement jusqu'à plusieurs centaines de mètres.

Dans un troisième exemple, le premier dispositif de communication sans fil 130 pourrait être un émetteur radiofréquence (RF). Les émetteurs RF sont capables d'émettre des signaux de mesure sur de longues distances, souvent plusieurs kilomètres, ce qui pourrait être utile si le capteur de déformation 110 et le dispositif de réception des signaux de mesure sont éloignés l'un de l'autre.

### Le serveur distant

Comme illustré sur la [Fig.1], le serveur distant 140 comprend au moins un deuxième dispositif de communication sans fil 141, au moins une mémoire de stockage 142, et au moins un processeur 143.

### Dans le serveur distant : le deuxième dispositif de communication sans fil

Dans l'invention, le deuxième dispositif de communication sans fil 141 est conçu pour recevoir le premier signal de mesure 111 et le deuxième signal de mesure 121.

Le terme «recevoir» dans l'invention fait référence à la capacité du deuxième dispositif de communication sans fil 141 à capter ou à obtenir le premier 111 et le deuxième signal de mesure 121 qui sont émis. Cela permet à ce dispositif de collecter et d'interpréter les informations transmises.

Ainsi, une fois que le premier 111 et le deuxième signal de mesure 121 ont été émis par le premier dispositif de communication sans fil 130, ils peuvent être reçus par le deuxième dispositif de communication sans fil 141.

### Dans le serveur distant : la mémoire de stockage

Dans l'invention, la mémoire de stockage 142 est conçue pour stocker un premier modèle mathématique d'estimation de remplissage du silo transportable 200 et l'associer au premier site d'exploitation.

Le terme « stocker» dans l'invention fait référence à la capacité de la mémoire de stockage 142 à conserver ou à enregistrer des informations, en l'occurrence un premier modèle mathématique d'estimation de remplissage du silo transportable 200.

Le terme «modèle mathématique d'estimation de remplissage» désigne une formule ou un ensemble de règles mathématiques qui permettent d'estimer précisément le niveau de remplissage du silo transportable 200. Ce modèle offre une méthode rigoureuse pour déterminer combien de matériau en vrac le silo transportable 200 contient à un moment donné.

Le terme «associer» fait référence à l'action de relier ou de connecter deux éléments ensemble. Dans l'invention, cela signifie que le premier modèle mathématique d'estimation de remplissage du silo transportable 200 est lié au premier site d'exploitation dans la mémoire de stockage 142.

Ainsi, si le premier site d'exploitation a des conditions spécifiques qui affectent le remplissage du silo transportable 200, ces informations peuvent être prises en compte dans le modèle mathématique et stockées ensemble dans la mémoire de stockage 142.

### Dans le serveur distant : le processeur

Dans l'invention, le processeur 143 est conçu pour réaliser un traitement numérique du premier signal de mesure 111 et du deuxième signal de mesure 121.

Le terme «traitement numérique» fait référence à l'application de méthodes mathématiques et de techniques informatiques pour manipuler et analyser des signaux ou des données numériques. Dans l'invention, cela signifie que le processeur 143 analyse et interprète le premier signal de mesure 111 et le deuxième signal de mesure 121 à l'aide de ces méthodes.

Ainsi, le processeur 143 peut appliquer différents algorithmes ou formules mathématiques pour interpréter les signaux de mesure et extraire des informations utiles à partir de ceux-ci.

Ces informations peuvent ensuite être utilisées pour estimer le niveau de remplissage du silo transportable 200.

Dans un premier exemple, les méthodes mathématiques pourraient inclure l'application d'opérations arithmétiques de base, comme l'addition, la soustraction, la multiplication et la division aux signaux de mesure 111, 121. Ces opérations pourraient être utilisées pour normaliser les signaux de mesure 111, 121, pour comparer les valeurs de mesure actuelles avec des valeurs de référence, ou pour calculer des variations dans les signaux de mesure 111, 121.

Dans un deuxième exemple, les techniques informatiques pourraient également faire appel à des méthodes d'analyse de données, comme l'analyse statistique. Le processeur 143 pourrait, par exemple, calculer des moyennes, des médianes ou des modes, établir des écarts types, ou effectuer des tests d'hypothèse pour aider à interpréter les signaux de mesure 111, 121.

En pratique, le processeur 143 est conçu pour extraire les valeurs de déformation horodatées du premier signal de mesure 111 et les valeurs de contrôle d'appui au sol horodatées du deuxième signal de mesure 121, respectivement.

Le terme «extraire» dans l'invention fait référence à l'action du processeur 143 de recueillir ou de récupérer spécifiquement les valeurs de déformation horodatées du premier signal de mesure 111 et les valeurs de contrôle d'appui au sol horodatées du deuxième signal de mesure 121.

Le terme «respectivement» est souvent utilisé pour indiquer qu'une correspondance ou une relation spécifique existe entre deux séries d'éléments, dans le même ordre. Dans l'invention, cela signifie que les valeurs de déformation horodatées sont extraites du premier signal de mesure 111, et les valeurs de contrôle d'appui au sol horodatées sont extraites du deuxième signal de mesure 121, conformément à l'ordre dans lequel elles sont mentionnées.

Ainsi, si le premier signal de mesure 111 contient des valeurs de déformation horodatées à 10h00, 10h30 et 11h00, et le deuxième signal de mesure 121 contient des valeurs de contrôle d'appui au sol horodatées à 10h00, 10h30 et 11h00, le processeur 143 recueillera ces valeurs dans cet ordre précis.

Dans l'invention, le processeur 143 est en outre conçu pour déterminer le début et la fin du transfert du silo transportable 200 à partir des valeurs de contrôle d'appui au sol horodatées.

Le terme «déterminer» dans l'invention fait référence à l'action du processeur 143 de calculer ou d'identifier précisément le début et la fin du transfert du silo transportable 200. Cela est réalisé en analysant et en interprétant les valeurs de contrôle d'appui au sol horodatées.

Le terme «début du transfert» dans l'invention, fait référence au moment où le processus de transfert du silo transportable 200 commence. Ce moment est identifié par le processeur 143 en analysant les valeurs de contrôle d'appui au sol horodatées.

Le terme «fin du transfert» fait référence au moment où le processus de transfert du silo transportable 200 se termine. Tout comme le début du transfert, ce moment est identifié par le processeur 143 à partir des valeurs de contrôle d'appui au sol horodatées.

Ainsi, le processeur 143 peut identifier le moment où les valeurs de contrôle d'appui au sol commencent à augmenter significativement comme indiquant le début du transfert du silo transportable 200.

Dans un premier exemple, «augmenter significativement» pourrait se référer à une augmentation rapide ou brusque des valeurs de contrôle d'appui au sol. Par exemple, si les valeurs de contrôle d'appui au sol doublent en l'espace d'une minute, cela pourrait être considéré comme une augmentation significative.

Dans un deuxième exemple, «augmenter significativement» pourrait se référer à une augmentation constante des valeurs de contrôle d'appui au sol sur une période prolongée. Par exemple, si les valeurs de contrôle d'appui au sol augmentent de 10 % chaque heure pendant dix heures, cela pourrait également être considéré comme une augmentation significative.

Aussi, le processeur 143 peut identifier le moment où les valeurs de contrôle d'appui au sol commencent à diminuer significativement comme indiquant la fin du transfert du silo transportable 200.

Dans un premier exemple, «diminuer significativement» pourrait signifier une diminution rapide ou brusque des valeurs de contrôle d'appui au sol. Par exemple, si les valeurs de contrôle d'appui au sol diminuent de moitié en l'espace de cinq minutes, cela pourrait être considéré comme une diminution significative.

Dans un deuxième exemple, «diminuer significativement» pourrait signifier une diminution constante des valeurs de contrôle d'appui au sol sur une période prolongée. Par exemple, si les valeurs de contrôle d'appui au sol diminuent de 5 % chaque heure pendant vingt heures, cela pourrait également être considéré comme une diminution significative.

Dans l'invention, en réponse à la détermination de la fin du transfert du silo transportable 200, le processeur 143 est en outre conçu pour établir un deuxième modèle mathématique d'estimation de remplissage.

Le terme «établir» dans l'invention fait référence à l'action du processeur 143 de créer et de configurer un deuxième modèle mathématique d'estimation de remplissage. Cela implique non seulement le calcul de diverses valeurs, mais également la détermination des paramètres et des variables du modèle en fonction des données reçues et analysées.

En d'autres termes, une fois que le processeur 143 a identifié la fin du transfert du silo transportable 200 à partir des valeurs de contrôle d'appui au sol horodatées, il entreprend de configurer un nouveau modèle mathématique pour estimer le niveau de remplissage du silo transportable 200.

Par exemple, le processeur 143 peut commencer par collecter des données supplémentaires, comme des valeurs de déformation horodatées, à partir du deuxième site d'exploitation et utiliser ces données pour établir le deuxième modèle mathématique d'estimation de remplissage.

En pratique, le deuxième modèle mathématique d'estimation de remplissage est établi de manière à comprendre au moins un premier paramètre et au moins un deuxième paramètre. Le premier paramètre caractérise le taux de remplissage du silo transportable 200, tandis que le deuxième paramètre caractérise la variation temporelle de tout ou partie des valeurs de déformation horodatées détectées après la fin du transfert du silo transportable 200.

Le terme «taux de remplissage» dans l'invention, fait référence au pourcentage de la masse effectivement contenue dans le silo transportable 200 par rapport à la masse maximale pouvant y être stockée.

Par exemple, si le silo transportable 200 est rempli à moitié, le taux de remplissage serait de 50 %.

Le terme « variation temporelle » fait référence à la manière dont une quantité spécifique, dans ce cas, tout ou partie des valeurs de déformation horodatées détectées, change ou évolue avec le temps après la fin du transfert du silo transportable 200.

Par exemple, les valeurs de déformation horodatées pourraient augmenter ou diminuer.

Ainsi, le premier paramètre et deuxième paramètre, conjointement utilisés, permettent au processeur 143 d'établir un modèle précis d'estimation de remplissage du silo transportable 200 sur le deuxième site d'exploitation, tenant compte des conditions locales au niveau du nouveau site d'exploitation.

Dans une première mise en œuvre du deuxième modèle mathématique d'estimation de remplissage, celle-ci définit une relation linéaire entre le taux de remplissage du silo transportable 200 et la variation temporelle de valeurs de déformation horodatées.

Le terme «relation linéaire» dans l'invention, fait référence à un type de liaison ou de connexion entre le taux de remplissage du silo transportable 200 et la variation temporelle de valeurs de déformation horodatées, où une modification uniforme de l'une de ces variables entraîne une modification proportionnelle de l'autre. Autrement dit, si l'on trace cette relation sur un graphique, elle forme une ligne droite, d'où le terme « linéaire ».

Ainsi, le processeur 143 peut, en utilisant cette relation linéaire, estimer avec précision le taux de remplissage du silo transportable 200 sur le deuxième site d'exploitation, en tenant compte des conditions locales au niveau de ce nouveau site d'exploitation.

Dans un premier exemple, une relation linéaire pourrait être une relation directe, où une augmentation du taux de remplissage du silo transportable 200 entraîne une augmentation proportionnelle de la variation temporelle des valeurs de déformation horodatées. Par exemple, si le taux de remplissage double, la variation temporelle des valeurs de déformation horodatées pourrait également doubler.

Dans un deuxième exemple, une relation linéaire pourrait être une relation inverse, où une augmentation du taux de remplissage du silo transportable 200 entraîne une diminution proportionnelle de la variation temporelle des valeurs de déformation horodatées. Par exemple, si le taux de remplissage double, la variation temporelle des valeurs de déformation horodatées pourrait être réduite de moitié.

Dans une deuxième mise en œuvre du deuxième modèle mathématique d'estimation de remplissage, celle-ci définit une relation déterminée de façon empirique entre le taux de remplissage du silo transportable 200 et la variation temporelle de valeurs de déformation horodatées.

Le terme «relation déterminée de façon empirique» dans l'invention, fait référence à une relation qui a été établie ou définie en se basant sur l'observation, l'expérience ou l'expérimentation plutôt que sur une théorie pure.

Cela signifie que la relation entre le taux de remplissage du silo transportable 200 et la variation temporelle de valeurs de déformation horodatées a été déterminée en observant et en analysant des données réelles.

Ainsi, le processeur 143 peut avoir accès à une base de données contenant des informations sur le taux de remplissage du silo transportable 200 et la variation temporelle de valeurs de déformation horodatées pour différentes conditions et sites d'exploitation.

En analysant ces données, le processeur 143 peut déterminer une relation empirique entre ces deux paramètres. Cette relation pourrait ensuite être utilisée pour estimer le taux de remplissage du silo transportable 200 sur d'autres sites d'exploitation.

Dans l'invention, le processeur 143 est en outre conçu pour stocker le deuxième modèle mathématique d'estimation de remplissage dans la mémoire de stockage 142 et l'associer au deuxième site d'exploitation.

Enfin, le processeur 143 est en outre conçu pour obtenir une estimation du niveau de remplissage du silo transportable 200 à partir du deuxième modèle mathématique d'estimation de remplissage.

Le terme «estimation» dans l'invention, fait référence à une évaluation ou un calcul approximatif du niveau de remplissage du silo transportable 200. Cette estimation est obtenue à partir du deuxième modèle mathématique d'estimation de remplissage et peut ne pas correspondre exactement à la valeur réelle, mais elle est conçue pour être aussi proche que possible de la réalité en se basant sur les données disponibles et le modèle utilisé.

### Première variante de l'invention : un capteur de déformation qui assure également la fonction du capteur de contrôle du support de la charge du silo transportable

Dans une première variante de l'invention, les valeurs de contrôle d'appui au sol horodatées comprennent des valeurs de déformation horodatées, mesurées sur le pied d'appui au sol 210.

En pratique, le capteur de déformation 110 assure également la fonction du capteur de contrôle d'appui au sol 120 du silo transportable 200.

Cela signifie que le capteur de déformation 110 peut surveiller le support de la charge du silo transportable 200 sans nécessiter un capteur de contrôle d'appui au sol 120 séparé.

Ainsi, dans cette mise en œuvre, le capteur de déformation 110 assume les rôles de deux capteurs, optimisant l'efficacité du système de transfert du silo transportable 200 d'un site d'exploitation à un autre.

Par exemple, si le silo transportable 200 est en train d'être transféré et qu'une déformation se produit, le capteur de déformation 110 peut à la fois enregistrer cette déformation et surveiller le support de la charge, permettant ainsi une gestion plus efficace du processus de transfert.

Par ailleurs, dans la première variante de l'invention, le processeur 143 est en outre conçu pour réaliser un traitement numérique de discrimination de tout ou partie des valeurs de déformation horodatées pour discriminer d'une part, des premières valeurs de déformation horodatées, et d'autre part, des deuxièmes valeurs de déformation horodatées.

En pratique, les premières valeurs de déformation horodatées sont celles qui se situent au-delà d'une marge prédéterminée de tolérance autour d'une valeur prédéterminée, connue, de compression du pied d'appui au sol 210 sur lequel est installé le système 100.

En outre, les deuxièmes valeurs de déformation horodatées sont celles qui se situent au-delà d'une marge prédéterminée de tolérance autour d'une valeur prédéterminée, connue, de traction du pied d'appui au sol 210 sur lequel est installé le système 100.

Ainsi, dans l'invention, si le silo transportable 200 subit une compression qui dépasse les limites prédéterminées de tolérance, cela signifie que le pied d'appui au sol 210 supporte le silo transportable 200, indiquant que le silo transportable 200 est debout. C'est ce que représentent les premières valeurs de déformation horodatées.

D'autre part, si le silo transportable 200 subit une traction qui dépasse les limites prédéterminées de tolérance, cela indique que le pied d'appui au sol 210 ne supporte plus le silo transportable 200. Cela peut signifier que le silo transportable 200 est soit soulevé, soit penché. C'est ce que représentent les deuxièmes valeurs de déformation horodatées.

Ainsi, le processeur 143 est capable de distinguer ces deux situations grâce à son traitement numérique des valeurs de déformation horodatées.

Enfin, dans la première variante de l'invention, le processeur 143 est en outre conçu pour déterminer le début du transfert du silo transportable 200 à partir au moins de la variation temporelle des premières valeurs de déformation horodatées et la fin du transfert du silo transportable 200 à partir au moins de la variation temporelle des deuxièmes valeurs de déformation horodatées.

Par exemple, une diminution significative des premières valeurs de déformation horodatées pourrait indiquer que le pied d'appui au sol 210 commence à ne plus supporter le poids du silo transportable 200, signalant ainsi le début du transfert.

Aussi, une augmentation significative des deuxièmes valeurs de déformation horodatées pourrait indiquer que le pied d'appui au sol 210 commence à supporter le poids du silo transportable 200, signalant ainsi la fin du transfert.

### Deuxième variante de l'invention : un capteur de déformation

Dans une deuxième variante de l'invention, les valeurs de contrôle d'appui au sol horodatées comprennent des valeurs de déformation horodatées, mesurées, lors de la mise en appui du silo transportable 200 au sol, sur au moins un élément sensible à la déformation qui est couplé au silo transportable 200.

Dans un premier exemple, cet élément sensible à la déformation est un élément structurel du silo transportable, comme un pied d'appui au sol 210, un renforcement latéral ou un «ski».

Dans un deuxième exemple, cet élément sensible à la déformation est un élément qui est fixé sur le silo transportable 200, par exemple sous un pied d'appui au sol 210 ou sous un «ski».

Dans la deuxième variante de l'invention, le capteur de contrôle d'appui au sol 120 du silo transportable 200 comprend au moins un capteur de déformation qui est conçu pour délivrer les valeurs de déformation horodatées.

Ainsi, dans cette mise en œuvre, le système 100 comprend deux capteurs de déformation 110, dont l'un assure la fonction du capteur de contrôle d'appui au sol 120 du silo transportable 200. Par ailleurs, ce deuxième capteur de déformation 110 peut être fixé au silo transportable 200, ailleurs que l'endroit où se trouve le premier capteur de déformation 110.

Par ailleurs, dans la deuxième variante de l'invention, le processeur 143 est en outre conçu pour réaliser un traitement numérique de discrimination de tout ou partie des valeurs de déformation horodatées pour discriminer d'une part, des premières valeurs de déformation horodatées, et d'autre part, des deuxièmes valeurs de déformation horodatées.

En pratique, les premières valeurs de déformation horodatées sont celles qui se situent au-delà d'une marge prédéterminée de tolérance autour d'une valeur prédéterminée, connue, de compression de l'élément sensible à la déformation.

En outre, les deuxièmes valeurs de déformation horodatées sont celles qui se situent au-delà d'une marge prédéterminée de tolérance autour d'une valeur prédéterminée, connue, de traction de l'élément sensible à la déformation.

Ainsi, dans l'invention, si le silo transportable 200 subit une compression qui dépasse les limites prédéterminées de tolérance, cela signifie que le pied d'appui au sol 210 supporte le silo transportable 200, indiquant que le silo transportable 200 est debout. C'est ce que représentent les premières valeurs de déformation horodatées.

D'autre part, si le silo transportable 200 subit une traction qui dépasse les limites prédéterminées de tolérance, cela indique que le pied d'appui au sol 210 ne supporte plus le silo transportable 200. Cela peut signifier que le silo transportable 200 est soit soulevé, soit penché. C'est ce que représentent les deuxièmes valeurs de déformation horodatées.

Ainsi, le processeur 143 est capable de distinguer ces deux situations grâce à son traitement numérique des valeurs de déformation horodatées.

Enfin, dans la deuxième variante de l'invention, le processeur 143 est en outre conçu pour déterminer le début du transfert du silo transportable 200 à partir au moins de la variation temporelle des premières valeurs de déformation horodatées et la fin du transfert du silo transportable 200 à partir au moins de la variation temporelle des deuxièmes valeurs de déformation horodatées.

Par exemple, une diminution significative des premières valeurs de déformation horodatées pourrait indiquer que le pied d'appui au sol 210 commence à ne plus supporter le poids du silo transportable 200, signalant ainsi le début du transfert.

Aussi, une augmentation significative des deuxièmes valeurs de déformation horodatées pourrait indiquer que le pied d'appui au sol 210 commence à supporter le poids du silo transportable 200, signalant ainsi la fin du transfert.

### Troisième variante de l'invention : un inclinomètre

Dans une troisième variante de l'invention, les valeurs de contrôle d'appui au sol horodatées comprennent des valeurs d'angle d'inclinaison horodatées qui sont mesurées par rapport à un horizon géographique.

Le terme «angle d'inclinaison» dans l'invention, fait référence à la mesure de la déviation ou de l'angle formé par le silo transportable 200 par rapport à un horizon géographique. En d'autres termes, il s'agit de l'angle formé entre une ligne horizontale imaginaire (l'horizon géographique) et le silo transportable 200. Cette mesure peut aider à déterminer si le silo transportable 200 est en train de se pencher ou de s'incliner d'une manière ou d'une autre.

Le terme «horizon géographique » dans l'invention, fait référence à une ligne imaginaire qui sépare le ciel de la terre. C'est une référence plane utilisée pour déterminer la position et l'inclinaison des objets, comme le silo transportable 200 dans ce cas. Les valeurs d'angle d'inclinaison sont mesurées par rapport à cet horizon géographique, permettant ainsi de déterminer comment le silo transportable 200 est incliné par rapport à la surface de la Terre.

Pour illustrer ce concept, prenons l'exemple d'un silo transportable 200 placé sur une surface plane. Si cette surface plane est parfaitement horizontale, c'est-à-dire parallèle à l'horizon géographique, alors l'angle d'inclinaison du silo transportable 200 par rapport à l'horizon géographique serait nul. Cependant, si la surface sur laquelle repose le silo transportable 200 est inclinée, alors l'angle d'inclinaison du silo transportable 200 par rapport à l'horizon géographique serait différent de zéro.

Dans la troisième variante de l'invention, le capteur de contrôle d'appui au sol 120 du silo transportable 200 comprend au moins un inclinomètre qui est conçu pour délivrer les valeurs d'angle d'inclinaison horodatées.

Par ailleurs, dans la troisième variante de l'invention, le processeur 143 est en outre conçu pour réaliser un traitement numérique de discrimination de tout ou partie des valeurs d'angle d'inclinaison horodatées pour discriminer d'une part, des premières valeurs d'angle d'inclinaison horodatées, et d'autre part, des deuxièmes valeurs d'angle d'inclinaison horodatées.

En pratique, les premières valeurs d'angle d'inclinaison horodatées sont celles qui se situent au-delà d'une marge prédéterminée de tolérance autour d'une position de référence initiale, connue, du pied d'appui au sol 210.

En outre, les deuxièmes valeurs d'angle d'inclinaison horodatées sont celles qui se situent dans la marge prédéterminée de tolérance autour de la position de référence initiale du pied d'appui au sol 210.

Le terme «marge prédéterminée de tolérance» dans l'invention fait référence à une plage de valeurs acceptables, définie à l'avance, autour d'une position de référence initiale du pied d'appui au sol 210. Cette marge sert à déterminer si les valeurs d'angle d'inclinaison horodatées sont représentatives du silo transportable 200 étant penché ou pas lors de son transfert d'un premier site d'exploitation vers un deuxième site d'exploitation.

Si elles se situent au-delà de cette marge, elles sont considérées comme des premières valeurs d'angle d'inclinaison horodatées, tandis que celles qui se situent à l'intérieur de cette marge sont considérées comme des deuxièmes valeurs d'angle d'inclinaison horodatées.

Pour donner un exemple concret, imaginons une marge de tolérance prédéterminée de dix degrés. Si une valeur d'angle d'inclinaison horodatée pour le silo transportable 200 est de cinq degrés, elle tombe à l'intérieur de la marge de tolérance. Cette valeur est donc considérée comme une deuxième valeur d'angle d'inclinaison horodatée, et n'est pas représentative d'un silo transportable 200 penché.

Cependant, si une valeur d'angle d'inclinaison horodatée est de quinze degrés, elle dépasse la marge de tolérance, et est donc classée comme une première valeur d'angle d'inclinaison horodatée, ce qui est représentatif d'un silo transportable 200 penché.

Enfin, dans la troisième variante de l'invention, le processeur 143 est en outre conçu pour déterminer le début du transfert du silo transportable 200 à partir au moins de la variation temporelle des premières valeurs d'angle d'inclinaison horodatées, et la fin du transfert du silo transportable 200 à partir au moins de la variation temporelle des deuxièmes valeurs d'angle d'inclinaison horodatées.

Ainsi, si les premières valeurs d'angle d'inclinaison horodatées, qui dépassent la marge prédéterminée de tolérance, commencent à être observées, le processeur 143 peut en déduire que le transfert du silo transportable 200 a commencé ou commence.

De la même manière, lorsque les deuxièmes valeurs d'angle d'inclinaison horodatées, qui se situent dans la marge prédéterminée de tolérance, commencent à être observées, le processeur 143 peut conclure que le transfert du silo transportable 200 se termine ou est terminé.

### Quatrième variante de l'invention : un accéléromètre

Dans une quatrième variante de l'invention, les valeurs de contrôle d'appui au sol horodatées comprennent des valeurs d'accélération horodatées qui sont mesurées par rapport au champ gravitationnel terrestre local du site d'exploitation.

Le terme «accélération» dans l'invention fait référence à la vitesse à laquelle un objet tombe librement sous l'influence de la gravité. Elle est mesurée en mètres par seconde carré (m/s²). Dans cette variante de l'invention, les valeurs de contrôle d'appui au sol horodatées comprennent des valeurs d'accélération qui sont mesurées.

Le terme «champ gravitationnel terrestre local» fait référence à la force de gravité spécifique à un emplacement particulier sur la surface de la Terre. Ce champ peut varier légèrement en fonction de facteurs tels que l'altitude, la latitude, ou des irrégularités dans la composition de la Terre. Dans l'invention, les valeurs d'accélération sont mesurées par rapport à ce champ local.

Ainsi, en mesurant les valeurs d'accélération par rapport à ce champ local, il est possible d'obtenir des valeurs de contrôle d'appui au sol horodatées qui sont précises et adaptées aux conditions locales spécifiques du site d'exploitation où le silo transportable 200 est utilisé.

Dans la quatrième variante de l'invention, le capteur de contrôle d'appui au sol 120 du silo transportable 200 comprend au moins un accéléromètre, qui est conçu pour délivrer les valeurs d'accélération horodatées.

Par ailleurs, dans la quatrième variante de l'invention, le processeur 143 est en outre conçu pour réaliser un traitement numérique de discrimination de tout ou partie des valeurs d'accélération horodatées pour discriminer d'une part, des premières valeurs d'accélération horodatées, et d'autre part, des deuxièmes valeurs d'accélération horodatées.

En pratique, les premières valeurs d'accélération horodatées sont celles qui se situent au-delà d'une marge prédéterminée de tolérance autour d'une valeur prédéterminée, connue, d'accélération.

En outre, les deuxièmes valeurs d'accélération horodatées sont celles qui se situent dans la marge prédéterminée de tolérance autour de la valeur prédéterminée d'accélération.

Par exemple, si une valeur d'accélération horodatée dépasse la marge prédéterminée de tolérance autour de la valeur prédéterminée d'accélération, elle est classée comme une première valeur d'accélération horodatée.

À l'inverse, si une valeur d'accélération horodatée se situe dans la marge prédéterminée de tolérance, elle est classée comme une deuxième valeur d'accélération horodatée.

En d'autres termes, les premières et deuxièmes valeurs d'accélération horodatées peuvent servir à indiquer si le silo transportable 200 est penché/en mouvement ou non.

Ainsi, si les valeurs d'accélération horodatées, qui dépassent la marge prédéterminée de tolérance, commencent à être observées, le processeur 143 peut en déduire que le silo transportable 200 est dans une position penchée ou en mouvement et que le transfert du silo transportable 200 a commencé.

En revanche, si les valeurs d'accélération horodatées se situent dans la marge prédéterminée de tolérance, les deuxièmes valeurs, cela pourrait indiquer que le silo transportable 200 est stable et pas penché ni en mouvement.

Enfin, dans la quatrième variante de l'invention, le processeur 143 est en outre conçu pour déterminer le début du transfert du silo transportable 200 à partir au moins de la variation temporelle des premières valeurs d'accélération horodatées, et la fin du transfert du silo transportable 200 à partir au moins de la variation temporelle des deuxièmes valeurs d'accélération horodatées.

En d'autres termes, dans la quatrième variante de l'invention, le processeur 143 utilise la variation temporelle des premières et deuxièmes valeurs d'accélération horodatées pour déterminer le début et la fin du transfert du silo transportable 200.

Par ailleurs, si les premières valeurs d'accélération horodatées, qui dépassent la marge prédéterminée de tolérance, commencent à être observées, cela peut indiquer que le transfert du silo transportable 200 a commencé. C'est-à-dire que le silo transportable 200 est en mouvement ou penché.

En pratique, si les deuxièmes valeurs d'accélération horodatées, celles qui se situent dans la marge prédéterminée de tolérance, commencent à être observées, le processeur 143 peut en déduire que le transfert du silo transportable 200 est terminé. Cela pourrait signifier que le silo transportable 200 est stable et bien placé sur le deuxième site d'exploitation.

### Cinquième variante de l'invention : un détecteur de géolocalisation

Dans une cinquième variante de l'invention, les valeurs de contrôle d'appui au sol horodatées comprennent des valeurs de géolocalisation horodatées.

Le terme «géolocalisation» fait référence à la détermination ou l'estimation de la position géographique réelle d'un objet, qui peut être une personne, un véhicule, ou dans ce contexte, un silo transportable. Cette position est généralement exprimée en termes de coordonnées géographiques, telles que la latitude et la longitude. Les valeurs de géolocalisation horodatées mentionnées dans le texte signifient que chaque mesure de la position a été marquée avec l'heure spécifique à laquelle elle a été enregistrée.

Dans la cinquième variante de l'invention, le système 100 comprend en outre un détecteur de géolocalisation qui est conçu pour délivrer les valeurs de géolocalisation horodatées qui sont mesurées.

Dans un premier exemple, le détecteur de géolocalisation peut être un détecteur de géolocalisation GPS, qui utilise les signaux des satellites pour déterminer la position précise du système 100 sur la surface de la Terre.

Dans un deuxième exemple, le détecteur de géolocalisation peut être un détecteur de géolocalisation Wi-Fi, qui utilise les signaux Wi-Fi disponibles pour déterminer la position du système 100. Ce type de détecteur est particulièrement utile dans les environnements où le signal GPS peut être faible ou inexistant, comme à l'intérieur des bâtiments.

Dans un troisième exemple, le détecteur de géolocalisation peut être un détecteur de géolocalisation cellulaire, qui utilise les signaux des tours de téléphonie cellulaire pour déterminer la position du système 100. Ce type de détecteur est particulièrement utile dans les zones urbaines denses, où le nombre de tours de téléphonie cellulaire est élevé

En pratique, le détecteur de géolocalisation est conçu pour être fixé sur le silo transportable 200, par exemple, sur au moins un pied d'appui au sol 210.

Toutefois, selon les besoins et les ressources disponibles, on pourra envisager de fixer le détecteur de localisation ailleurs sur le silo transportable 200, et ce, sans nécessiter de modifications substantielles de l'invention. Par ailleurs, dans la cinquième variante de l'invention, le processeur 143 est en outre conçu pour réaliser un traitement numérique de discrimination de tout ou partie valeurs de géolocalisation horodatées pour discriminer d'une part, des premières valeurs de géolocalisation horodatées, et d'autre part, des deuxièmes valeurs de géolocalisation horodatées.

En pratique, les premières valeurs de géolocalisation horodatées sont celles qui se situent au-delà d'une marge prédéterminée de tolérance autour d'une valeur prédéterminée, connue, de géolocalisation.

En outre, les deuxièmes valeurs de géolocalisation horodatées sont celles qui se situent dans la marge prédéterminée de tolérance autour de la valeur prédéterminée de géolocalisation.

Par exemple, si une valeur de géolocalisation horodatée dépasse la marge prédéterminée de tolérance autour de la valeur prédéterminée de géolocalisation, elle est classée comme une première valeur de géolocalisation horodatée.

À l'inverse, si une valeur de géolocalisation horodatée se situe dans la marge prédéterminée de tolérance, elle est classée comme une deuxième valeur de géolocalisation horodatée.

En d'autres termes, les premières et deuxièmes valeurs de géolocalisation horodatées peuvent servir à indiquer si le silo transportable 200 est mouvement ou non.

Ainsi, si les valeurs de géolocalisation horodatées, qui dépassent la marge prédéterminée de tolérance, les premières valeurs, cela pourrait indiquer que le silo transportable 200 est en mouvement.

En revanche, si les valeurs de géolocalisation horodatées se situent dans la marge prédéterminée de tolérance, commencent à varier, le processeur 143 peut en déduire que le silo transportable 200 est stable et pas penché, ni en mouvement.

Enfin, dans la cinquième variante de l'invention, le processeur 143 est en outre conçu pour déterminer le début du transfert du silo transportable 200 à partir au moins de la variation temporelle des premières valeurs de géolocalisation horodatées, et la fin du transfert du silo transportable 200 à partir au moins de la variation temporelle des deuxièmes valeurs de géolocalisation horodatées.

En d'autres termes, dans la cinquième variante de l'invention, le processeur 143 utilise la variation temporelle des premières et deuxièmes valeurs de géolocalisation horodatées pour déterminer le début et la fin du transfert du silo transportable 200.

Par ailleurs, si les premières valeurs de géolocalisation horodatées, celles qui dépassent la marge prédéterminée de tolérance, commencent à varier, cela peut indiquer que le transfert du silo transportable 200 a commencé. C'est-à-dire que le silo transportable 200 est en mouvement ou penché.

En pratique, si les deuxièmes valeurs de géolocalisation horodatées, celles qui se situent dans la marge prédéterminée de tolérance, commencent à varier, cela peut indiquer que le transfert du silo transportable 200 est terminé. Cela pourrait signifier que le silo transportable 200 est stable et bien placé sur le deuxième site d'exploitation.

### Sixième variante de l'invention : économie d'énergie

Dans une sixième variante de l'invention, on considère que le capteur de déformation 110 et le capteur de contrôle d'appui au sol 120 du silo transportable 200 sont deux capteurs distincts et indépendants.

Le terme «distinct» dans l'invention signifie que le capteur de déformation 110 et le capteur de contrôle d'appui au sol 120 sont séparés l'un de l'autre, ils ne sont pas le même dispositif. Ils sont deux entités différentes ayant chacune sa propre existence physique.

Le terme «indépendant» signifie que le capteur de déformation 110 et le capteur de contrôle d'appui au sol 120 fonctionnent de manière autonome. Cela implique que le fonctionnement ou les résultats de l'un n'affectent pas le fonctionnement ou les résultats de l'autre. Chacun peut accomplir sa tâche sans l'intervention ou l'assistance de l'autre.

Dans la sixième variante de l'invention, le processeur 143 est en outre conçu pour délivrer des instructions d'activation du capteur de déformation 110, en réponse à la détermination du début du transfert du silo transportable 200.

Le terme «instructions d'activation » dans l'invention fait référence à un ensemble de commandes ou de directives émises par le processeur 143 pour mettre en marche le capteur de déformation 110.

Ces instructions sont délivrées en réponse à la détermination du début du transfert du silo transportable 200, permettant ainsi d'activer le capteur de déformation 110 au moment approprié.

Ces instructions peuvent comprendre des commandes spécifiques pour initialiser le capteur, préparer ses composants pour la collecte de données, et commencer la surveillance ou la mesure de la déformation.

Par ailleurs, le processeur 143 est en outre conçu pour délivrer des instructions de désactivation du capteur de déformation 110, en réponse à la détermination de la fin du transfert du silo transportable 200.

Le terme «instructions de désactivation » dans l'invention fait référence à un ensemble de commandes ou de directives émises par le processeur 143 pour arrêter le fonctionnement du capteur de déformation 110.

Ces instructions sont délivrées en réponse à la détermination de la fin du transfert du silo transportable 200, permettant ainsi de désactiver le capteur de déformation 110 après son utilisation.

Ces instructions peuvent comprendre des commandes spécifiques pour arrêter la collecte de données, désactiver les composants du capteur, et préparer le capteur pour une période d'inactivité.

Ensuite, le deuxième dispositif de communication sans fil 141 est en outre conçu pour émettre les instructions d'activation et de désactivation.

Puis, le premier dispositif de communication sans fil 130 est en outre conçu pour recevoir les instructions d'activation et de désactivation.

Ensuite, le capteur de déformation 110 est en outre conçu pour désactiver la détection des déformations du pied d'appui au sol 210, en réponse à la réception des instructions de désactivation.

Enfin, le capteur de déformation 110 est en outre conçu pour activer la détection des déformations du pied d'appui au sol 210, en réponse à la réception des instructions d'activation.

### Conclusion

Nous avons décrit et illustré l'invention. Toutefois, l'invention ne se limite pas aux formes de réalisations que nous avons présentées. En effet, de nombreuses combinaisons des variantes, alternatives, modes de réalisation et mises en œuvre, peuvent être envisagées sans s'écarter de l'objet de l'invention tel que défini dans les revendications annexées.

Ainsi, l'homme du métier comprendra sans peine que les différentes variantes de l'invention peuvent être combinées entre elles comme de besoin.

Par exemple, l'homme du métier comprendra que le capteur de contrôle d'appui au sol 120 du silo transportable 200 peut comprendre au moins deux capteurs du même type ou de types différents choisis au moins parmi : un capteur de déformation, un inclinomètre, un accéléromètre et un détecteur de géolocalisation.

En outre, un expert du domaine peut déduire d'autres variantes, alternatives, modes de réalisation et mises en œuvre, à la lecture de la description et des figures annexées et en fonction des contraintes économiques, ergonomiques, dimensionnelles à respecter.

En particulier, lorsqu'un élément est «conçu» pour remplir une fonction particulière, cela signifie que cet élément est créé spécifiquement dans le but de remplir cette fonction particulière.

Toutefois, selon les besoins et les ressources disponibles, on pourra envisager d'utiliser un élément existant, que l'on modifiera ou adaptera pour remplir cette fonction particulière, et ce, sans nécessiter de modifications substantielles de l'invention.

Par ailleurs, le terme «au moins » signifie qu'un certain nombre minimum est requis ou attendu, sans exclure la possibilité que le nombre réel puisse être plus élevé. C'est un moyen d'indiquer un seuil minimum qui doit être atteint ou dépassé. Par exemple, si un élément comprend «au moins » deux sous-éléments, cela signifie que l'élément comprendra deux de ces sous-éléments ou plus, mais pas moins de deux.

L'invention peut faire l'objet de nombreuses variantes et applications autres que celles décrites ci-dessus. En particulier, sauf indication contraire, les différentes caractéristiques structurelles et fonctionnelles de chaque façon particulière décrite ci-dessus ne doivent pas être considérées comme combinées et/ou étroitement et/ ou inextricablement liées les unes aux autres, mais, au contraire, comme de simples juxtapositions. En outre, les caractéristiques structurelles et/ou fonctionnelles des différentes variantes décrites ci-dessus peuvent faire l'objet en tout ou partie de toute juxtaposition différente ou de toute combinaison différente.

## Revendications

1. Système (100) spécifiquement conçu pour détecter le transfert d'un silo transportable (200) d'un premier site d'exploitation vers un deuxième site d'exploitation, impliquant un changement des conditions locales du terrain et du sol auxquelles le silo transportable (200) est soumis, le silo transportable (200) étant spécifiquement destiné au stockage et/ou au mélange d'au moins un matériau en vrac, le silo transportable (200) comprenant au moins trois pieds d'appui au sol (210), le système (100) comprenant,
- au moins un capteur de déformation (110) qui est conçu pour,
-- être fixé sur au moins un pied d'appui au sol (210), -- détecter et horodater des déformations du pied d'appui au sol (210), en réponse à l'introduction ou à l'extraction du matériau en vrac dans le silo transportable (200),
-- convertir les déformations détectées en valeurs de déformation horodatées, et
-- générer au moins un premier signal de mesure (111) qui comprend les valeurs de déformation horodatées,
- au moins un capteur de contrôle d'appui au sol (120) du silo transportable (200) qui est conçu pour,
-- être fixé au silo transportable (200),
-- détecter et horodater des données de contrôle d'appui au sol (120) du silo transportable (200), en réponse au transfert du silo transportable (200),
-- convertir les données de contrôle d'appui au sol (120) du silo transportable (200) par le pied d'appui au sol (210) détectées, en valeurs de contrôle d'appui au sol horodatées,
-- générer au moins un deuxième signal de mesure (121) qui comprend les valeurs de contrôle d'appui au sol horodatées,
- au moins un premier dispositif de communication sans fil (130) qui est conçu pour émettre le premier signal de mesure (111) et le deuxième signal de mesure (121),
- au moins un serveur distant (140) qui comprend,
-- au moins un deuxième dispositif de communication sans fil (141) qui est conçu pour recevoir le premier signal de mesure (111) et le deuxième signal de mesure (121),
-- au moins une mémoire de stockage (142) qui conçue pour stocker au moins un premier modèle mathématique d'estimation de remplissage du silo transportable (200) et l'associer au premier site d'exploitation,
-- au moins un processeur (143) qui est conçu pour,
--- réaliser un traitement numérique du premier signal de mesure (111) et du deuxième signal de mesure (121), pour extraire les valeurs de déformation horodatées du premier signal de mesure (111) et les valeurs de contrôle d'appui au sol horodatées du deuxième signal de mesure (121), respectivement,
--- déterminer le début et la fin du transfert du silo transportable (200) à partir au moins des valeurs de contrôle d'appui au sol horodatées,
--- établir, en réponse à la détermination de la fin du transfert du silo transportable (200), un deuxième modèle mathématique d'estimation de remplissage qui comprend au moins un premier paramètre qui caractérise le taux de remplissage du silo transportable (200) et au moins un deuxième paramètre qui caractérise la variation temporelle de tout ou partie des valeurs de déformation horodatées qui ont été détectées après la fin du transfert du silo transportable (200),
--- stocker le deuxième modèle mathématique d'estimation de remplissage dans la mémoire de stockage (142) et l'associer au deuxième site d'exploitation, et
--- obtenir une estimation du niveau de remplissage du silo transportable (200) à partir du deuxième modèle mathématique d'estimation de remplissage.

2. Système (100) selon la revendication 1, dans lequel,
- les valeurs de contrôle d'appui au sol horodatées comprennent des valeurs de déformation horodatées, mesurées sur le pied d'appui au sol (210),
- le capteur de déformation (110) assure également la fonction du capteur de contrôle d'appui au sol (120) du silo transportable (200),
- le processeur (143) est en outre conçu pour,
-- réaliser un traitement numérique de discrimination de tout ou partie des valeurs de déformation horodatées pour discriminer,
--- d'une part, des premières valeurs de déformation horodatées qui se situent au-delà d'une marge prédéterminée de tolérance autour d'une valeur prédéterminée de compression du pied d'appui au sol (210), et
--- d'autre part, des deuxièmes valeurs de déformation horodatées qui se situent au-delà d'une marge prédéterminée de tolérance autour d'une valeur prédéterminée de traction du pied d'appui au sol (210),
-- déterminer,
--- le début du transfert du silo transportable (200) à partir au moins de la variation temporelle des premières valeurs de déformation horodatées, et
--- la fin du transfert du silo transportable (200) à partir au moins de la variation temporelle des deuxièmes valeurs de déformation horodatées.

3. Système (100) selon l'une quelconque des revendications 1 à 2, dans lequel,
- les valeurs de contrôle d'appui au sol horodatées comprennent des valeurs de déformation horodatées, mesurées, lors de la mise en appui du silo transportable (200) au sol, sur au moins un élément sensible à la déformation qui est couplé au silo transportable (200),
- le capteur de contrôle d'appui au sol (120) du silo transportable (200) comprend au moins un deuxième capteur de déformation qui est conçu pour délivrer les valeurs de déformation horodatées,
- le processeur (143) est en outre conçu pour,
-- réaliser un traitement numérique de discrimination de tout ou partie des valeurs de déformation horodatées pour discriminer,
--- d'une part, des premières valeurs de déformation horodatées qui se situent au-delà d'une marge prédéterminée de tolérance autour d'une valeur prédéterminée, connue, de compression de l'élément sensible à la déformation, et
--- d'autre part, des deuxièmes valeurs de déformation horodatées qui se situent dans la marge prédéterminée de tolérance autour d'une valeur prédéterminée, connue, de traction de l'élément sensible à la déformation,
-- déterminer,
--- le début du transfert du silo transportable (200) à partir au moins de la variation temporelle des premières valeurs de déformation horodatées, et
--- la fin du transfert du silo transportable (200) à partir au moins de la variation temporelle des deuxièmes valeurs de déformation horodatées.

4. Système (100) selon l'une quelconque des revendications 1 à 3, dans lequel,
- les valeurs de contrôle d'appui au sol horodatées comprennent des valeurs d'angle d'inclinaison horodatées, mesurées par rapport à un horizon géographique,
- le capteur de contrôle d'appui au sol (120) du silo transportable (200) comprend au moins un inclinomètre qui est conçu pour délivrer les valeurs d'angle d'inclinaison horodatées,
- le processeur (143) est en outre conçu pour,
-- réaliser un traitement numérique de discrimination de tout ou partie des valeurs d'angle d'inclinaison horodatées pour discriminer,
--- d'une part, des premières valeurs d'angle d'inclinaison horodatées qui se situent au-delà d'une marge prédéterminée de tolérance autour d'une position de référence initiale du pied d'appui au sol (210), et
--- d'autre part, des deuxièmes valeurs d'angle d'inclinaison horodatées qui se situent dans la marge prédéterminée de tolérance autour de la position de référence initiale du pied d'appui au sol (210),
-- déterminer,
--- le début du transfert du silo transportable (200) à partir au moins de la variation temporelle des premières valeurs d'angle d'inclinaison horodatées, et
--- la fin du transfert du silo transportable (200) à partir au moins de la variation temporelle des deuxièmes valeurs d'angle d'inclinaison horodatées.

5. Système (100) selon l'une quelconque des revendications 1 à 4, dans lequel,
- les valeurs de contrôle d'appui au sol horodatées comprennent des valeurs d'accélération horodatées, mesurées par rapport au champ gravitationnel terrestre local,
- le capteur de contrôle d'appui au sol (120) du silo transportable (200) comprend au moins un accéléromètre, qui sont conçus pour délivrer les valeurs d'accélération horodatées,
- le processeur (143) est en outre conçu pour,
-- réaliser un traitement numérique de discrimination de tout ou partie des valeurs d'accélération horodatées pour discriminer,
--- d'une part, des premières valeurs d'accélération horodatées qui se situent au-delà d'une marge prédéterminée de tolérance autour d'une valeur prédéterminée d'accélération, et
--- d'autre part, des deuxièmes valeurs d'accélération horodatées qui se situent dans la marge prédéterminée de tolérance autour de la valeur prédéterminée d'accélération,
-- déterminer,
--- le début du transfert du silo transportable (200) à partir au moins de la variation temporelle des premières valeurs d'accélération horodatées, et
--- la fin du transfert du silo transportable (200) à partir au moins de la variation temporelle des deuxièmes valeurs d'accélération horodatées.

6. Système (100) selon l'une quelconque des revendications 1 à 5, dans lequel,
- les valeurs de contrôle d'appui au sol horodatées comprennent des valeurs de géolocalisation horodatées,
- le capteur de contrôle d'appui au sol (120) du silo transportable (200) comprend au moins un détecteur de géolocalisation qui est conçu pour délivrer les valeurs de géolocalisation horodatées,
- le processeur (143) est en outre conçu pour,
-- réaliser un traitement numérique de discrimination de tout ou partie des valeurs de géolocalisation horodatées pour discriminer,
--- d'une part, des premières valeurs de géolocalisation horodatées qui se situent au-delà d'une marge prédéterminée de tolérance autour d'une valeur prédéterminée de géolocalisation, et
--- d'autre part, des deuxièmes valeurs de géolocalisation horodatées qui se situent dans la marge prédéterminée de tolérance autour de la valeur prédéterminée de géolocalisation,
-- déterminer,
--- le début du transfert du silo transportable (200) à partir au moins de la variation temporelle des premières valeurs de géolocalisation horodatées, et
--- la fin du transfert du silo transportable (200) à partir au moins de la variation temporelle des deuxièmes valeurs de géolocalisation horodatées.

7. Système (100) selon l'une quelconque des revendications 1 à 6, dans lequel, lorsque le capteur de déformation (110) et le capteur de contrôle d'appui au sol (120) du silo transportable (200) sont deux capteurs distincts et indépendants, alors,
- le processeur (143) est en outre conçu pour délivrer,
-- des instructions d'activation du capteur de déformation (110), en réponse à la détermination du début du transfert du silo transportable (200),
-- des instructions de désactivation du capteur de déformation (110), en réponse à la détermination de la fin du transfert du silo transportable (200),
- le deuxième dispositif de communication sans fil (141) est en outre conçu pour émettre les instructions d'activation et de désactivation,
- le premier dispositif de communication sans fil (130) est en outre conçu pour recevoir les instructions d'activation et de désactivation,
- le capteur de déformation (110) est en outre conçu pour,
-- désactiver la détection des déformations du pied d'appui au sol (210), en réponse à la réception des instructions de désactivation, et
-- activer la détection des déformations du pied d'appui au sol (210), en réponse à la réception des instructions d'activation.

8. Système (100) selon l'une quelconque des revendications 2 à 7, dans lequel le capteur de contrôle d'appui au sol (120) du silo transportable (200) comprend au moins deux capteurs du même type ou de types différents choisis au moins parmi : un capteur de déformation, un inclinomètre, un accéléromètre et un détecteur de géolocalisation.

9. Système (100) selon l'une quelconque des revendications 1 à 8, dans lequel le deuxième modèle mathématique d'estimation de remplissage définit une relation linéaire entre le taux de remplissage du silo transportable (200) et la variation temporelle de valeurs de déformation horodatées.

10. Système (100) selon l'une quelconque des revendications 1 à 8, dans lequel le deuxième modèle mathématique d'estimation de remplissage définit une relation déterminée de façon empirique entre le taux de remplissage du silo transportable (200) et la variation temporelle de valeurs de déformation horodatées.

11. Système (100) selon l'une quelconque des revendications 1 à 10, dans lequel, au moins un capteur de déformation (110) est fixé sur chaque pied d'appui au sol (210).

12. Système (100) selon l'une quelconque des revendications 1 à 11, dans lequel, au moins un capteur de contrôle d'appui au sol (120) du silo transportable (200) est fixé sur chaque pied d'appui au sol (210) ou à chaque élément sensible à la déformation qui est couplé au silo transportable (200).

## Patentansprüche

1. System (100), das spezifisch dazu ausgelegt ist, den Transfer eines transportierbaren Silos (200) von einem ersten Betriebsstandort zu einem zweiten Betriebsstandort, der eine Änderung der lokalen Verhältnisse des Geländes und des Bodens bedingt, denen das transportierbare Silo (200) ausgesetzt ist, zu detektieren, wobei das transportierbare Silo (200) spezifisch zum Lagern und/oder zum Mischen mindestens eines Schüttguts bestimmt ist, wobei das transportierbare Silo (200) mindestens drei Standbeine auf dem Boden (210) umfasst, wobei das System (100) umfasst:
- mindestens einen Verformungssensor (110), der ausgelegt ist zum:
-- Befestigen an mindestens einem Standbein auf dem Boden (210),
-- Detektieren und Zeitstempeln der Verformungen des Standbeins auf dem Boden (210) als Reaktion auf die Einführung oder die Entnahme des Schüttguts in dem transportierbaren Silo (200),
-- Konvertieren der detektierten Verformungen in zeitgestempelte Verformungswerte, und
-- Generieren mindestens eines ersten Messsignals (111), das die zeitgestempelten Verformungswerte umfasst,
- mindestens einen Sensor (120) zum Kontrollieren der Abstützung auf dem Boden des transportierbaren Silos (200), der ausgelegt ist zum:
-- Befestigen an dem transportierbaren Silo (200),
-- Detektieren und Zeitstempeln der Kontrolldaten (120) der Abstützung auf dem Boden des transportierbaren Silos (200) als Reaktion auf den Transfer des transportierbaren Silos (200),
-- Konvertieren der detektierten Kontrolldaten (120) der Abstützung auf dem Boden des durch das Standbein auf dem Boden (210) transportierbaren Silos (200) in zeitgestempelte Werte zum Kontrollieren der Abstützung auf dem Boden,
-- Generieren mindestens eines zweiten Messsignals (121), das die zeitgestempelten Werte zum Kontrollieren der Abstützung auf dem Boden umfasst,
- mindestens eine erste drahtlose Kommunikationsvorrichtung (130), die dazu ausgelegt ist, das erste Messsignal (111) und das zweite Messsignal (121) zu emittieren,
- mindestens einen entfernten Server (140), umfassend:
-- mindestens eine zweite drahtlose Kommunikationsvorrichtung (141), die dazu ausgelegt ist, das erste Messsignal (111) und das zweite Messsignal (121) zu empfangen,
-- mindestens einen Speicher (142), der dazu ausgelegt ist, mindestens ein erstes mathematisches Modell zum Schätzen der Befüllung des transportierbaren Silos (200) zu speichern und dem ersten Betriebsstandort zuzuordnen,
-- mindestens einen Prozessor (143), der ausgelegt ist zum:
--- Ausführen einer digitalen Bearbeitung des ersten Messsignals (111) und des zweiten Messsignals (121), um jeweils die zeitgestempelten Verformungswerte des ersten Messsignals (111) und die zeitgestempelten Kontrollwerte der Abstützung auf dem Boden des zweiten Messsignals (121) zu entnehmen,
--- Bestimmen des Anfangs und des Endes des Transfers des transportierbaren Silos (200) mindestens aus den zeitgestempelten Kontrollwerten der Abstützung auf dem Boden,
--- Erstellen, als Reaktion auf die Bestimmung des Endes des Transfers des transportierbaren Silos (200), eines zweiten mathematischen Modells zum Schätzen der Befüllung, das mindestens einen ersten Parameter, der den Befüllungsgrad des transportierbaren Silos (200) kennzeichnet, und mindestens einen zweiten Parameter, der die zeitliche Variation aller oder einiger der zeitgestempelten Verformungswerte, die nach dem Ende des Transfers des transportierbaren Silos (200) detektiert wurden, kennzeichnet, umfasst,
--- Speichern des zweiten mathematischen Modells zum Schätzen der Befüllung in dem Speicher (142) und Zuordnen desselben zu dem zweiten Betriebsstandort, und
--- Erzielen einer Schätzung des Füllstands des transportierbaren Silos (200) aus dem zweiten mathematischen Modell zum Schätzen der Befüllung.

2. System (100) nach Anspruch 1, wobei
- die zeitgestempelten Kontrollwerte der Abstützung auf dem Boden zeitgestempelte Verformungswerte umfassen, die an dem Standbein auf dem Boden (210) gemessen werden,
- der Verformungssensor (110) auch die Funktion des Sensors (120) zum Kontrollieren der Abstützung auf dem Boden des transportierbaren Silos (200) sicherstellt,
- der Prozessor (143) ferner ausgelegt ist zum:
-- Ausführen einer digitalen Bearbeitung zum Diskriminieren aller oder einiger der zeitgestempelten Verformungswerte zum Diskriminieren:
--- einerseits von ersten zeitgestempelten Verformungswerten, die sich außerhalb eines vorbestimmten Toleranzbereichs um einen vorbestimmten Kompressionswert des Standbeins auf dem Boden (210) herum befinden, und
--- andererseits von zweiten zeitgestempelten Verformungswerten, die sich außerhalb eines vorbestimmten Toleranzbereichs um einen vorbestimmten Traktionswert des Standbein auf dem Boden (210)herum befinden,
-- Bestimmen
--- des Anfangs des Transfers des transportierbaren Silos (200) mindestens aus der zeitlichen Variation der ersten zeitgestempelten Verformungswerte, und
--- des Endes des Transfers des transportierbaren Silos (200) mindestens aus der zeitlichen Variation der zweiten zeitgestempelten Verformungswerte.

3. System (100) nach einem der Ansprüche 1 bis 2, wobei
- die zeitgestempelten Kontrollwerte der Abstützung auf dem Boden zeitgestempelte Verformungswerte umfassen, die beim Abstützen des transportierbaren Silos (200) auf dem Boden an mindestens einem verformungsempfindlichen Element, das mit dem transportierbaren Silo (200) gekoppelt ist, gemessen werden,
- der Sensor (120) zum Kontrollieren der Abstützung auf dem Boden des transportierbaren Silos (200) mindestens einen zweiten Verformungssensor umfasst, der dazu ausgelegt ist, die zeitgestempelten Verformungswerte abzugeben,
- der Prozessor (143) ferner ausgelegt ist zum:
-- Ausführen einer digitalen Bearbeitung zum Diskriminieren aller oder einiger der zeitgestempelten Verformungswerte zum Diskriminieren
--- einerseits von ersten zeitgestempelten Verformungswerten, die sich außerhalb eines vorbestimmten Toleranzbereichs um einen bekannten vorbestimmten Wert der Kompression des verformungsempfindlichen Elements herum befinden, und
--- andererseits zweiten zeitgestempelten Verformungswerten, die sich in dem vorbestimmten Toleranzbereich um einen bekannten vorbestimmten Wert der Traktion des verformungsempfindlichen Elements herum befinden,
-- Bestimmen
--- des Anfangs des Transfers des transportierbaren Silos (200) mindestens aus der zeitlichen Variation der ersten zeitgestempelten Verformungswerte, und
--- des Endes des Transfers des transportierbaren Silos (200) mindestens aus der zeitlichen Variation der zweiten zeitgestempelten Verformungswerte.

4. System (100) nach einem der Ansprüche 1 bis 3, wobei
- die zeitgestempelten Kontrollwerte der Abstützung auf dem Boden zeitgestempelte Neigungswinkelwerte umfassen, die im Verhältnis zu einem geographischen Horizont gemessen werden,
- der Sensor (120) zum Kontrollieren der Abstützung auf dem Boden des transportierbaren Silos (200) mindestens einen Neigungsmesser umfasst, der dazu ausgelegt ist, die zeitgestempelten Neigungswinkelwerte abzugeben,
- der Prozessor (143) ferner ausgelegt ist zum:
-- Ausführen einer digitalen Bearbeitung zum Diskriminieren aller oder einiger zeitgestempelter Neigungswinkelwerte zum Diskriminieren
--- einerseits von ersten zeitgestempelten Neigungswinkelwerten, die sich außerhalb eines vorbestimmten Toleranzbereichs um eine anfängliche Referenzposition des Standbeins auf dem Boden (210) befinden, und
--- andererseits von zweiten zeitgestempelten Neigungswinkelwerten, die sich in dem vorbestimmten Toleranzbereich um die anfängliche Referenzposition des Standbeins auf dem Boden (210) herum befinden,
-- Bestimmen
--- des Anfangs des Transfers des transportierbaren Silos (200) mindestens aus der zeitlichen Variation der ersten zeitgestempelten Neigungswinkelwerte, und
--- des Endes des Transfers des transportierbaren Silos (200) mindestens aus der zeitlichen Variation der zweiten zeitgestempelten Neigungswinkelwerte.

5. System (100) nach einem der Ansprüche 1 bis 4, wobei
- die zeitgestempelten Kontrollwerte der Abstützung auf dem Boden zeitgestempelte Beschleunigungswerte umfassen, die im Verhältnis zum lokalen Erdgravitationsfeld gemessen werden,
- der Sensor (120) zum Kontrollieren der Abstützung auf dem Boden des transportierbaren Silos (200) mindestens einen Beschleunigungsmesser umfasst, der dazu ausgelegt ist, die zeitgestempelten Beschleunigungswerte abzugeben,
- der Prozessor (143) ferner ausgelegt ist zum:
-- Ausführen einer digitalen Bearbeitung zum Diskriminieren aller oder einiger der zeitgestempelten Beschleunigungswerte zum Diskriminieren,
--- einerseits von ersten zeitgestempelten Beschleunigungswerten, die sich außerhalb eines vorherbestimmten Toleranzbereichs um einen vorherbestimmten Beschleunigungswert herum befinden, und
--- andererseits von zweiten zeitgestempelten Beschleunigungswerten, die sich in dem vorherbestimmten Toleranzbereich um den vorherbestimmten Beschleunigungswert herum befinden,
-- Bestimmen
--- des Anfangs des Transfers des transportierbaren Silos (200) mindestens aus der zeitlichen Variation der ersten zeitgestempelten Beschleunigungswerte, und
--- des Endes des Transfers des transportierbaren Silos (200) mindestens aus der zeitlichen Variation der zweiten zeitgestempelten Beschleunigungswerte.

6. System (100) nach einem der Ansprüche 1 bis 5, wobei
- die zeitgestempelten Kontrollwerte der Abstützung auf dem Boden zeitgestempelte Geolokalisierungswerte umfassen,
- der Sensor (120) zum Kontrollieren der Abstützung auf dem Boden des transportierbaren Silos (200) mindestens einen Geolokalisierungsdetektor umfasst, der dazu ausgelegt ist, die zeitgestempelten Geolokalisierungswerte abzugeben,
- der Prozessor (143) ferner ausgelegt ist zum:
-- Ausführen einer digitalen Bearbeitung zum Diskriminieren aller oder einiger der zeitgestempelten Geolokalisierungswerte zum Diskriminieren,
--- einerseits von ersten zeitgestempelten Geolokalisierungswerten, die sich außerhalb eines vorherbestimmten Toleranzbereichs um einen vorherbestimmten Geolokalisierungswert herum befinden, und
--- andererseits von zweiten zeitgestempelten Geolokalisierungswerten, die sich in dem vorherbestimmten Toleranzbereich um den vorherbestimmten Geolokalisierungswert herum befinden,
-- Bestimmen
--- des Anfangs des Transfers des transportierbaren Silos (200) mindestens aus der zeitlichen Variation der ersten zeitgestempelten Geolokalisierungswerte, und
--- des Endes des Transfers des transportierbaren Silos (200) mindestens aus der zeitlichen Variation der zweiten zeitgestempelten Geolokalisierungswerte.

7. System (100) nach einem der Ansprüche 1 bis 6, wobei, wenn der Verformungssensor (110) und der Sensor (120) zum Kontrollieren der Abstützung auf dem Boden des transportierbaren Silos (200) zwei verschiedene und unabhängige Sensoren sind, dann
- der Prozessor (143) ferner ausgelegt ist zum Abgeben von
-- Aktivierungsanweisungen des Verformungssensors (110) als Reaktion auf die Bestimmung des Anfangs des Transfers des transportierbaren Silos (200),
-- Deaktivierungsanweisungen des Verformungssensors (110) als Reaktion auf die Bestimmung des Endes des Transfers des transportierbaren Silos (200),
- die zweite drahtlose Kommunikationsvorrichtung (141) ferner dazu ausgelegt ist, die Aktivierungs- und Deaktivierungsanweisungen zu emittieren,
- die erste drahtlose Kommunikationsvorrichtung (130) ferner dazu ausgelegt ist, die Aktivierungs- und Deaktivierungsanweisungen zu empfangen,
- der Verformungssensor (110) ferner ausgelegt ist zum:
-- Deaktivieren der Detektion der Verformungen des Standbeins auf dem Boden (210) als Reaktion auf den Empfang der Deaktivierungsanweisungen, und
-- Aktivieren der Detektion der Verformungen des Standbeins auf dem Boden (210) als Reaktion auf den Empfang der Aktivierungsanweisungen.

8. System (100) nach einem der Ansprüche 2 bis 7, wobei der Sensor (120) zum Kontrollieren der Abstützung auf dem Boden des transportierbaren Silos (200) mindestens zwei gleichartige Sensoren oder unterschiedliche Sensoren umfasst, die ausgewählt werden mindestens aus: einem Verformungssensor, einem Neigungsmesser, einem Beschleunigungsmesser und einem Geolokalisierungsdetektor.

9. System (100) nach einem der Ansprüche 1 bis 8, wobei das zweite mathematische Modell zum Schätzen der Befüllung eine lineare Beziehung zwischen dem Befüllungsgrad des transportierbaren Silos (200) und der zeitlichen Variation von zeitgestempelten Verformungswerten definiert.

10. System (100) nach einem der Ansprüche 1 bis 8, wobei das zweite mathematische Modell zum Schätzen der Befüllung eine Beziehung definiert, die zwischen dem Befüllungsgrad des transportierbaren Silos (200) und der zeitlichen Variation der zeitgestempelten Verformungswerte empirisch bestimmt wird.

11. System (100) nach einem der Ansprüche 1 bis 10, wobei mindestens ein Verformungssensor (110) an jedem Standbein auf dem Boden (210) befestigt ist.

12. System (100) nach einem der Ansprüche 1 bis 11, wobei mindestens ein Sensor (120) zum Kontrollieren der Abstützung auf dem Boden des transportierbaren Silos (200) an jedem Standbein auf dem Boden (210) oder an jedem verformungsempfindlichen Element, das mit dem transportierbaren Silo (200) gekoppelt ist, befestigt ist.

## Claims

1. A system (100) specifically designed to detect the transfer of a transportable silo (200) from a first operating site to a second operating site, involving a change in the local terrain and ground conditions to which the transportable silo (200) is subjected, the transportable silo (200) being specifically intended for the storage and/or the mixing of at least a bulk material, the transportable silo (200) comprising at least three ground bearing legs (210), the system (100) comprising:
- at least a deformation sensor (110) designed to:
-- be fixed on at least a ground bearing leg (210),
-- detect and time-stamp deformations of the ground bearing leg (210) in response to the introduction or to the extraction of the bulk material into/from the transportable silo (200),
-- convert the detected deformations into time-stamped deformation values, and
-- generate at least a first measurement signal (111) that comprises the time-stamped deformation values,
- at least a control sensor for the ground bearing (120) of the transportable silo (200) designed to:
-- be fixed to the transportable silo (200),
-- detect and time-stamp control data for the ground bearing (120) of the transportable silo (200) in response to the transfer of the transportable silo (200),
-- convert the detected control data for the ground bearing (120) of the transportable silo (200) from the ground bearing leg (210) into time-stamped ground bearing control values,
-- generate at least a second measurement signal (121) which comprises the time-stamped ground bearing control values,
- at least a first wireless communication device (130) designed to emit the first measurement signal (111) and the second measurement signal (121),
- at least a remote server (140) which comprises:
-- at least a second wireless communication device (141) designed to receive the first measurement signal (111) and the second measurement signal (121),
-- at least a storage memory (142) designed to store at least a first mathematical model for estimating the filling of the transportable silo (200) and associate it with the first operating site,
-- at least a processor (143) designed to:
--- perform a digital processing of the first measurement signal (111) and of the second measurement signal (121) to extract the time-stamped deformation values from the first measurement signal (111) and the time-stamped ground bearing control values from the second measurement signal (121), respectively,
--- determine the start and the end of the transfer of the transportable silo (200) from at least the time-stamped ground bearing control values,
--- establish, in response to the determination of the end of the transfer of the transportable silo (200), a second filling estimation mathematical model which comprises at least a first parameter that characterizes the fill rate of the transportable silo (200) and at least a second parameter that characterizes the temporal variation of all or part of the time-stamped deformation values that have been detected after the end of the transfer of the transportable silo (200),
--- store the second filling estimation mathematical model in the storage memory (142) and associate it with the second operating site, and
--- obtain an estimation of the fill level of the transportable silo (200) from the second filling estimation mathematical model.

2. The system (100) according to claim 1, wherein:
- the time-stamped ground bearing control values comprise time-stamped deformation values measured on the ground bearing leg (210);
- the deformation sensor (110) also ensures the function of the control sensor for the ground bearing (120) of the transportable silo (200),
- the processor (143) is further designed to:
-- perform a digital processing for discriminating all or part of the time-stamped deformation values to discriminate between:
--- on the one hand, first time-stamped deformation values that are beyond a predetermined tolerance margin around a predetermined compression value of the ground bearing leg (210); and
--- on the other hand, second time-stamped deformation values that are beyond a predetermined tolerance margin around a predetermined traction value of the ground bearing leg (210);
-- determine:
--- the start of the transfer of the transportable silo (200) from at least the temporal variation of the first time-stamped deformation values, and
--- the end of the transfer of the transportable silo (200) from at least the temporal variation of the second time-stamped deformation values.

3. The system (100) according to any one of claims 1 to 2, wherein:
- the time-stamped ground bearing control values comprise time-stamped deformation values measured, during the ground bearing of the transportable silo (200), on at least a deformation-sensitive element coupled to the transportable silo (200);
- the control sensor for the ground bearing (120) of the transportable silo (200) comprises at least a second deformation sensor designed to deliver the time-stamped deformation values;
- the processor (143) is further designed to:
-- perform a digital processing for discriminating all or part of the time-stamped deformation values to discriminate between:
--- on the one hand, first time-stamped deformation values that are beyond a predetermined tolerance margin around a known predetermined compression value of the deformation-sensitive element; and
--- on the other hand, second time-stamped deformation values that are within the predetermined tolerance margin around a known predetermined traction value of the deformation-sensitive element,
-- determine:
--- the start of the transfer of the transportable silo (200) from at least the temporal variation of the first time-stamped deformation values, and
--- the end of the transfer of the transportable silo (200) from at least the temporal variation of the second time-stamped deformation values.

4. The system (100) according to any one of claims 1 to 3, wherein:
- the time-stamped ground bearing control values comprise time-stamped inclination angle values measured relative to a geographical horizon;
- the control sensor for the ground bearing (120) of the transportable silo (200) comprises at least an inclinometer designed to deliver the time-stamped inclination angle values;
- the processor (143) is further designed to:
-- perform a digital processing for discriminating all or part of the time-stamped inclination angle values to discriminate between:
--- on the one hand, first time-stamped inclination angle values that are beyond a predetermined tolerance margin around an initial reference position of the ground bearing leg (210); and
--- on the other hand, second time-stamped inclination angle values that are within the predetermined tolerance margin around the initial reference position of the ground bearing leg (210),
-- determine:
--- the start of the transfer of the transportable silo (200) from at least the temporal variation of the first time-stamped inclination angle values, and
--- the end of the transfer of the transportable silo (200) from at least the temporal variation of the second time-stamped inclination angle values.

5. The system (100) according to any one of claims 1 to 4, wherein:
- the time-stamped ground bearing control values comprise time-stamped acceleration values measured relative to the local Earth's gravitational field;
- the control sensor for the ground bearing (120) of the transportable silo (200) comprises at least an accelerometer which is designed to deliver the time-stamped acceleration values;
- the processor (143) is further designed to:
-- perform a digital processing for discriminating all or part of the time-stamped acceleration values to discriminate between:
--- on the one hand, first time-stamped acceleration values that are beyond a predetermined tolerance margin around a predetermined acceleration value, and
--- on the other hand, second time-stamped acceleration values that are within the predetermined tolerance margin around the predetermined acceleration value;
-- determine:
--- the start of the transfer of the transportable silo (200) from at least the temporal variation of the first time-stamped acceleration values, and
--- the end of the transfer of the transportable silo (200) from at least the temporal variation of the second time-stamped acceleration values.

6. The system (100) according to any one of claims 1 to 5, wherein:
- the time-stamped ground bearing control values comprise time-stamped geolocation values;
- the control sensor for the ground bearing (120) of the transportable silo (200) comprises at least a geolocation detector designed to deliver the time-stamped geolocation values;
- the processor (143) is further designed to:
-- perform a digital processing for discriminating all or part of the time-stamped geolocation values to discriminate between:
--- on the one hand, first time-stamped geolocation values that are beyond a predetermined tolerance margin around a predetermined geolocation value; and
--- on the other hand, second time-stamped geolocation values that are within the predetermined tolerance margin around the predetermined geolocation value;
-- determine:
--- the start of the transfer of the transportable silo (200) from at least the temporal variation of the first time-stamped geolocation values, and
--- the end of the transfer of the transportable silo (200) from at least the temporal variation of the second time-stamped geolocation values.

7. The system (100) according to any one of claims 1 to 6, wherein, when the deformation sensor (110) and the control sensor for the ground bearing (120) of the transportable silo (200) are two distinct and independent sensors, then:
- the processor (143) is further designed to deliver:
-- activation instructions to activate the deformation sensor (110) in response to the determination of the start of the transfer of the transportable silo (200);
-- deactivation instructions to deactivate the deformation sensor (110) in response to the determination of the end of the transfer of the transportable silo (200);
- the second wireless communication device (141) is further designed to emit the activation and deactivation instructions;
- the first wireless communication device (130) is further designed to receive the activation and deactivation instructions;
- the deformation sensor (110) is further designed to:
-- deactivate the detection of the deformations of the ground bearing leg (210) in response to the receipt of deactivation instructions, and
-- activate the detection of the deformations of the ground bearing leg (210) in response to the receipt of activation instructions.

8. The system (100) according to any one of claims 2 to 7, wherein the control sensor for the ground bearing (120) of the transportable silo (200) comprises at least two sensors of the same type or of different types selected at least among: a deformation sensor, an inclinometer, an accelerometer and a geolocation detector.

9. The system (100) according to any one of claims 1 to 8, wherein the second filling estimation mathematical model defines a linear relationship between the fill rate of the transportable silo (200) and the temporal variation of time-stamped deformation values.

10. The system (100) according to any one of claims 1 to 8, wherein the second filling estimation mathematical model defines an empirically determined relationship between the fill rate of the transportable silo (200) and the temporal variation of time-stamped deformation values.

11. The system (100) according to any one of claims 1 to 10, wherein at least a deformation sensor (110) is fixed on each ground bearing leg (210).

12. The system (100) according to any one of claims 1 to 11, wherein at least a control sensor for the ground bearing (120) of the transportable silo (200) is fixed on each ground bearing leg (210) or to each deformation-sensitive element coupled to the transportable silo (200).
